# EUROPEAN PATENT APPLICATION

(11) **EP 4 823 162 A1**
(43) Date of publication of application: **14.10.2026**
(21) Application number: 23960859.9
(22) Date of filing: 08.12.2023
(51) Int. Cl.: H04W 24/10, H04W 16/28, H04W 72/115, H04W 72/21

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing, 100190 (CN); CHEN, Lan, Beijing, 100190 (CN)
(74) Representative: Hoffmann Eitle
(86) International application number: PCT/JP2023/044054
(87) International publication number: WO 2025/120849

(57) **Abstract**

A terminal according to one aspect of the present disclosure includes: a control section that determines a trigger of event-based beam reporting for a Multi-Input Multi-Output (MIMO) operation; and a transmitting section that transmits beam reporting information regarding the event-based beam reporting in a configured grant physical uplink shared channel (CG PUSCH) or a physical uplink control channel (PUCCH). According to one aspect of the present disclosure, communication quality/throughput can be improved.

## Description

### Technical Field

The present disclosure relates to a terminal, a radio communication method, and a base station in nextgeneration mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems (for example, NR), the introduction of beam management that is initiated by a terminal (user terminal, user equipment (UE)) (UE-initiated) and event-driven is being studied from the viewpoint of overhead/delay reduction.

However, a detailed study of such beam management is not sufficient. When such study is not sufficient, lowerlatency communication cannot be realized, which may inhibit the improvement of communication quality/throughput.

Therefore, an object of the present disclosure is to provide a terminal, a radio communication method, and a base station capable of improving communication quality/throughput.

### Solution to Problem

A terminal according to one aspect of the present disclosure includes: a control section that determines a trigger of event-based beam reporting for a Multi-Input Multi-Output (MIMO) operation; and a transmitting section that transmits beam reporting information regarding the event-based beam reporting in a configured grant physical uplink shared channel (CG PUSCH) or a physical uplink control channel (PUCCH).

### Advantageous Effects of Invention

According to one aspect of the present disclosure, communication quality/throughput can be improved.

### Brief Description of Drawings

[FIG. 1] FIGS. 1A and 1B illustrate an example of a unified/common TCI framework.
[FIG. 2] FIGS. 2A and 2B illustrate an example of DCI-based TCI state indication.
[FIG. 3] FIG. 3 is a diagram illustrating an example of a timeline for TCI state switching/activation defined up to Rel. 15/16.
[FIG. 4] FIG. 4 is a diagram illustrating an example of a TCI state defined up to Rel. 16.
[FIG. 5] FIG. 5A is a diagram illustrating an example of movement of a UE in Rel. 17. FIG. 5B is a diagram illustrating an example of movement of the UE in Rel. 18.
[FIG. 6] FIG. 6 is a flowchart illustrating an example of processing for event-based beam reporting.
[FIG. 7] FIG. 7 is a diagram illustrating an example of beam reporting according to a first embodiment.
[FIG. 8] FIG. 8 is a diagram illustrating an example of starting a timer regarding retransmission of beam reporting according to the first embodiment.
[FIG. 9] FIG. 9 is a diagram illustrating an example of stopping the timer regarding retransmission of beam reporting according to the first embodiment.
[FIG. 10] FIG. 10 is a diagram illustrating another example of stopping the timer regarding retransmission of beam reporting according to the first embodiment.
[FIG. 11] FIG. 11 is a diagram illustrating a first example of a MAC CE used for CSI reporting.
[FIG. 12] FIG. 12 is a diagram illustrating a second example of a MAC CE used for CSI reporting.
[FIG. 13] FIG. 13 is a diagram illustrating a third example of a MAC CE used for CSI reporting.
[FIG. 14] FIG. 14 is a diagram illustrating a fourth example of a MAC CE used for CSI reporting.
[FIG. 15] FIG. 15 is a diagram illustrating a fifth example of a MAC CE used for CSI reporting.
[FIG. 16] FIG. 16 is a diagram illustrating a sixth example of a MAC CE used for CSI reporting.
[FIG. 17] FIG. 17 is a diagram illustrating a seventh example of a MAC CE used for CSI reporting.
[FIG. 18] FIG. 18 is a diagram illustrating an eighth example of a MAC CE used for CSI reporting.
[FIG. 19] FIG. 19 is a diagram illustrating an example of a CG PUSCH according to Option 3-A.
[FIG. 20] FIG. 20 is a diagram illustrating an example of a CG PUSCH according to Option 3-B.
[FIG. 21] FIG. 21 is a diagram illustrating an example of transmission of beam reporting information according to Option 4-5.
[FIG. 22] FIG. 22 is a diagram illustrating an example of transmission of beam reporting information according to Option 4-6.
[FIG. 23] FIG. 23 is a diagram illustrating an example of transmission of beam reporting information according to Option 4-7.
[FIG. 24] FIG. 24 is a diagram illustrating an example of transmission of beam reporting information according to Option 4-8.
[FIG. 25] FIGS. 25A and 25B are diagrams illustrating SR selection and association between SRs and SSBs according to a variation of a fourth embodiment.
[FIG. 26] FIG. 26 is a diagram illustrating an example of starting the timer regarding retransmission of beam reporting according to a sixth embodiment.
[FIG. 27] FIG. 27 is a diagram illustrating an example of a schematic configuration of a radio communication system according to one embodiment.
[FIG. 28] FIG. 28 is a diagram illustrating an example of a configuration of a base station according to one embodiment.
[FIG. 29] FIG. 29 is a diagram illustrating an example of a configuration of a user terminal according to one embodiment.
[FIG. 30] FIG. 30 is a diagram illustrating an example of a hardware configuration of a base station and a user terminal according to one embodiment.
[FIG. 31] FIG. 31 is a diagram illustrating an example of a vehicle according to one embodiment.

### Description of Embodiments

### (CSI Reporting)

In the NR, UE measures a channel state using a predetermined reference signal (or a resource for the reference signal), and feeds back (reports) the channel state information (CSI) to a base station.

The UE may measure the channel state using a channel state information-reference signal (CSI-RS), a synchronization signal/physical broadcast channel (SS/PBCH) block, a synchronization signal (SS), a demodulation reference signal (DMRS), and the like.

The CSI-RS resource may include at least one of non zero power (NZP) CSI-RS and CSI-interference management (IM). The SS/PBCH block is a block including a synchronization signal (for example, primary synchronization signal (PSS) and secondary synchronization signal (SSS)) and a PBCH (and the corresponding DMRS), which may be called an SS block (SSB) or the like. An SSB index may be given for a time position of an SSB in a half frame.

Note that the CSI may include at least one of channel quality indicator (CQI), precoding matrix indicator (PMI), a CSI-RS resource indicator (CRI), SS/PBCH block resource indicator (SSBRI), layer indicator (LI), rank indicator (RI), layer 1 (L1)-reference signal received power (RSRP), L1-reference signal received quality (RSRQ), L1-signal to interference plus noise ratio (SINR), L1-signal to noise ratio (SNR), or the like.

The CSI may include a plurality of parts. The first part of CSI (CSI part 1) may include information with a relatively small number of bits (for example, RI). The second part of CSI (CSI part 2) may include information having a relatively large number of bits (for example, CQI) such as information determined based on the CSI part 1.

As a CSI feedback method, (1) periodic CSI (P-CSI) reporting, (2) aperiodic CSI (A(AP)-CSI) reporting, (3) semi-permanent (semi-persistent) CSI (SP-CSI) reporting, and the like have been studied.

The UE may be notified of information regarding the CSI reporting (which may be referred to as CSI reporting configuration information) by using higher layer signaling, physical layer signaling (for example, downlink control information (DCI)), or a combination thereof. The CSI reporting configuration information may be configured by using, for example, an RRC information element "CSI-ReportConFig".

The CSI reporting configuration information may include, in one example, information relating to a reporting period, an offset, or the like, which may be represented by a predetermined time unit (such as units of slot, units of subframe, and units of symbol). The CSI reporting configuration information may include a configuration ID (CSI-ReportConfigId). Parameters such as a type of a CSI reporting method (SP-CSI or not, and the like) and a reporting period may be specified by the configuration ID. The CSI reporting configuration information may include information (CSI-ResourceConfigId) indicating which signal (or a resource for which signal) is used to measure the CSI to be reported.

### (TCI, Spatial Relation, and QCL)

In NR, controlling reception processing (for example, at least one of reception, demapping, demodulation, and decoding) and transmission processing (for example, at least one of transmission, mapping, precoding, modulation, and encoding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information on a quasi-co-location (QCL) of the signal/channel and may also be referred to as a spatial Rx parameter, spatial relation information, or the like. The TCI state may be configured in the UE for each channel or each signal.

The QCL is an indicator indicating a statistical property of the signal/channel. For example, this may mean that, when a certain signal/channel and another signal/channel have a QCL relationship, it may be assumed that at least one of a Doppler shift, a Doppler spread, an average delay, a delay spread, and a spatial parameter (for example, the spatial Rx parameter) is the same (the QCL for at least one of the foregoing) between the plurality of different signals/channels.

Note that the spatial Rx parameter may correspond to a reception beam of the UE (for example, a reception analog beam), and the beam may be specified based on spatial QCL. The QCL (or at least one element of the QCL) in the present disclosure may be interchangeable with spatial QCL (sQCL).

A plurality of types of QCL (QCL types) may be defined. In one example, four QCL types A to D of different parameters (or parameter sets) that are assumable to be identical can be provided, and the parameters (also referred to as QCL parameters) are shown below:
- QCL type A (QCL-A): Doppler shift, Doppler spread, average delay, and delay spread,
- QCL type B (QCL-B): Doppler shift and Doppler spread,
- QCL type C (QCL-C): Doppler shift and average delay,
- QCL type D (QCL-D): Spatial Rx parameter.

The QCL information as shown in QCL types A to D described above may be referred to as a QCL characteristic (property).

It may be referred to as a QCL assumption for the UE to assume that a specific control resource set (CORESET), channel, or reference signal has a specific QCL (for example, QCL type D) relationship with another CORESET, channel, or reference signal.

Based on a TCI state of the signal/channel or the QCL assumption, the UE may also determine at least one of a transmission beam (Tx beam) and a reception beam (Rx beam) of the corresponding signal/channel.

The TCI state may be, for example, information on the QCL of a target channel (in other words, a reference signal (RS) for the corresponding channel) and another signal (for example, another RS). The TCI state may be configured (indicated) by higher layer signaling, physical layer signaling, or a combination thereof.

The physical layer signaling may be, for example, downlink control information (DCI).

A channel for which a TCI state or a spatial relation is configured (designated) may be, for example, at least one of a physical downlink shared channel (PDSCH), a physical downlink control channel (PDCCH), a physical uplink shared channel (PUSCH), and a physical uplink control channel (PUCCH).

Furthermore, an RS having a QCL relationship with the channel may be, for example, at least one of a synchronization signal block (SSB), a channel state information reference signal (CSI-RS), a sounding reference signal (SRS), a tracking CSI-RS (also called a tracking reference signal (TRS)), and a QCL detection reference signal (also called a QRS).

The SSB is a signal block including at least one of a primary synchronization signal (PSS), a secondary synchronization signal (SSS), and a broadcast channel (physical broadcast channel (PBCH)). The SSB may be referred to as an SS/PBCH block.

An RS of QCL type X in a TCI state may mean an RS in a QCL type X relationship with (DMRS of) a certain channel/signal, and this RS may be referred to as a QCL source of QCL type X in the TCI state.

### (Unified/Common TCI Framework)

According to a unified TCI framework, plural types (UL/DL) of channels/RSs can be controlled by a common framework. The unified TCI framework may indicate the common beam (common TCI state) and apply the indicated common beam to all UL and DL channels, or apply the common beam for UL to all UL channels and apply the common beam for DL to all DL channels, instead of defining the TCI state or spatial relation for each channel as in Rel. 15.

One common beam for both DL and UL, or the common beam for DL and the common beam for UL (two common beams in total) have been studied.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool, and DL common TCI pool) for each of UL and DL.

The UL and DL default beams may be aligned by beam management based on MAC CE (MAC CE level beam indication). The default TCI state of the PDSCH may be updated to match a default UL beam (spatial relation).

Beam management based on the DCI (DCI level beam indication) may indicate the common beam/unified TCI state from the same TCI pool (joint common TCI pool, joint TCI pool, set) for both UL and DL. X (> 1) TCI states may be activated by the MAC CE. The UL/DL DCI may select one from the X active TCI states. The selected TCI state may be applied to the channels/RSs of both UL and DL.

The TCI pool (set) may be a plurality of TCI states configured by an RRC parameter, or may be a plurality of TCI states (active TCI state, active TCI pool, set) activated by the MAC CE among the plurality of TCI states configured by the RRC parameter. Each TCI state may be a QCL type A/D RS. The SSB, the CSI-RS, or the SRS may be configured as the QCL type A/D RS.

The number of TCI states corresponding to each of one or more TRPs may be defined. For example, the number N (≥ 1) of TCI states (UL TCI states) applied to the UL channel/RS and the number M (≥ 1) of TCI states (DL TCI states) applied to the DL channel/RS may be defined. At least one of N and M may be notified/configured/indicated to the UE via higher layer signaling/physical layer signaling.

In the present disclosure, in a case where N = M = X (X is any integer) is described, it may mean that a TCI state (joint TCI state) common to X ULs and DLs (corresponding to X TRPs) is notified/configured/indicated to the UE. In addition, when described as N = X (X is any integer) and M = Y (Y is any integer, Y = X may be possible), it may mean that X (corresponding to X TRPs) UL TCI states and Y (corresponding to Y TRPs) DL TCI states (that is, separate TCI state) are respectively notified/configured/indicated to the UE.

For example, when described as N = M = 1, it may mean that one TCI state common to the UL and the DL for a single TRP is notified/configured/indicated to the UE (joint TCI state for a single TRP).

In addition, for example, when described as N = 1 and M = 1, it may mean that one UL TCI state and one DL TCI state for a single TRP are separately notified/configured/indicated to the UE (separate TCI state for a single TRP).

In addition, for example, when described as N = M = 2, it may mean that a plurality of (two) TCI states common to the UL and the DL for a plurality of (two) TRPs are notified/configured/indicated to the UE (joint TCI states for a plurality of TRPs).

In addition, for example, when described as N = 2 and M = 2, it may mean that a plurality of (two) UL TCI states and a plurality of (two) DL TCI states for a plurality of (two) TRPs are notified/configured/indicated to the UE (separate TCI state for a plurality of TRPs).

It is noted that, in the above example, the case where the values of N and M are 1 or 2 has been described, but the values of N and M may be 3 or more, and N and M may be different.

It is being studied that N = M = 1 is supported in Rel. 17. For example, indication of one common beam (for example, common beam) by RRC/MAC CE/DCI may be supported, and the one common beam may be applied to a plurality of DL/UL channels/reference signals. In addition, other cases may be supported in Rel. 18 or later.

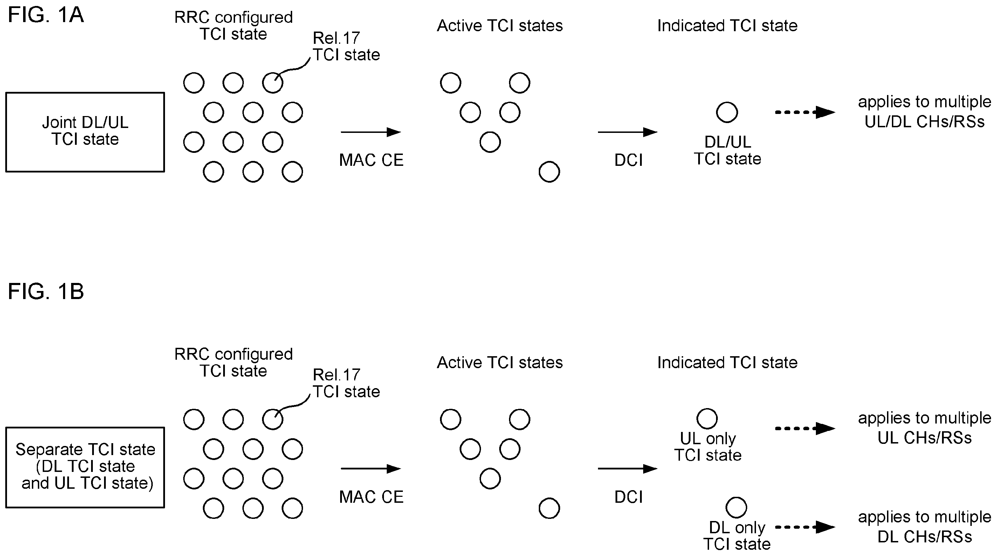

FIGS. 1A and 1B illustrate one example of the unified TCI framework. FIG. 1A illustrates an example of a joint DL/UL TCI state (for example, Joint DL/UL TCI state), and FIG. 1B illustrates an example of separate TCI states (for example, Separate TCI (DL TCI state and UL TCI state)).

In the example of FIG. 1A, the RRC parameter (information element) configures a plurality of TCI states for both DL and UL. In the present disclosure, the TCI states configured by the RRC parameter may be referred to as configured TCI states (for example, configured TCI states). The MAC CE may activate a plurality of TCI states among the configured plurality of TCI states. The DCI may indicate one of a plurality of activated TCI states. In the present disclosure, the TCI states indicated by DCI may be referred to as a TCI state indicated or an indicated TCI state (for example, Indicated TCI state).

The DCI may be UL DCI (for example, DCI used for scheduling a PUSCH) or DL DCI (for example, DCI used for scheduling a PDSCH). The indicated TCI state may be applied to at least one (or all) of the UL/DL channels/RSs. One piece of DCI may indicate both UL TCI and DL TCI.

In the example of this drawing, one point may be one TCI state applied to both UL and DL, or two TCI states applied to UL and DL, respectively.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

It is noted that, in the present disclosure, a higher layer parameter (RRC parameter) for configuring the plurality of TCI states may be referred to as configuration information for configuring the plurality of TCI states, and may be simply referred to as "configuration information". In addition, in the present disclosure, the indication of one of the plurality of TCI states by using the DCI may be receiving indication information indicating one of the plurality of TCI states included in the DCI, or may be simply receiving "indication information".

In the example of FIG. 1B, the RRC parameter configures a plurality of TCI states for both DL and UL (joint common TCI pool). The MAC CE may activate a plurality of TCI states (active TCI pool) among the configured plurality of TCI states. Active TCI pools (separate) for UL and DL may be configured/activated.

DL DCI or a new DCI format may select (indicate) one or more (for example, one) TCI states. The selected TCI state may be applied to one or more (or all) DL channels/RSs. The DL channel may be PDCCH/PDSCH/CSI-RS. The UE may determine the TCI state of each channel/RS of the DL using the operation of the TCI state in Rel. 16 (TCI framework). UL DCI or a new DCI format may select (indicate) one or more (for example, one) TCI states. The selected TCI state may be applied to one or more (or all) UL channels/RSs. The UL channel may be PUSCH/SRS/PUCCH. In this way, different pieces of DCI may separately indicate UL TCI and DL DCI.

In Rel. 17 NR or later, it is assumed that the MAC CE/DCI supports beam activation/indication to TCI states associated with different physical cell identifiers (PCIs). In addition, in Rel. 18 NR or later, it is assumed that an indication to change the serving cell to a cell having a different PCI is supported by MAC CE/DCI.

The method of configuring/indicating the TCI state (for example, the joint DL/UL TCI state) in FIG. 1A and the method of applying (for example, the separate TCI state) and configuring/indicating the TCI state in FIG. 1B may be switched and applied. Which of the joint DL/UL TCI state and the separate TCI state is applied may be configured by a higher layer parameter from the base station to the UE.

### (TCI State Indication)

A Rel. 17 unified TCI framework supports the following modes 1 to 3.
[Mode 1] MAC CE-based TCI state indication (MAC CE based TCI state indication)
[Mode 2] DCI-based TCI state indication with DL assignment (DCI based TCI state indication by DCI format 1_1/1_2 with DL assignment)
[Mode 3] DCI-based TCI state indication without DL assignment (DCI based TCI state indication by DCI format 1_1/1_2 without DL assignment)

A UE with a TCI state that is configured and activated with a Rel. 17 TCI state ID (for example, tci-StateId_r17) receives DCI format 1_1/1_2 providing an indicated TCI state with a Rel. 17 TCI state ID to one CC, or receives DCI format 1_1/1_2 providing an indicated TCI state with a Rel. 17 TCI state ID to all of the CCs in the same CC list as that configured with the simultaneous TCI update list 1 or the simultaneous TCI update list 2 (for example, simultaneousTCI-UpdateList1 or simultaneousTCI-UpdateList2). If a DL assignment is available, the DCI format 1_1/1_2 may or may not be accompanied by the DL assignment.

When the DCI format 1_1/1_2 is not accompanied by DL assignment, the UE can assume (validate) the following for the DCI.
- A CS-RNTI is used for scrambling a CRC for the DCI.
- Values of the following DCI fields (special fields) are set as follows.
- Redundancy version (RV) fields are all '1's.
- Modulation and coding scheme (MCS) fields are all '1's.
- A new data indicator (NDI) field is 0.
- Frequency domain resource assignment (FDRA) fields are all '0's for FDRA type 0, are all '1's for FDRA type 1, or are all '0's for dynamic switch (as with validation of a PDCCH with a DL semi-persistent scheduling (SPS) or a UL grant type 2 scheduling release).

Note that the DCI in the mode 2/mode 3 may be referred to as beam indication DCI.

In Rel. 15/16, when the UE does not support an active BWP change via DCI, the UE ignores a BWP indicator field. The same operation is considered for a relationship between support of a Rel. 17 TCI state and interpretation of a TCI field. It is being studied that, when the UE is configured with a Rel. 17 TCI state, a TCI field is always present in DCI format 1_1/1_2 and that, when the UE does not support TCI update via DCI, the UE ignores a TCI field.

In Rel. 15/16, whether a TCI field is present (TCI present information in DCI, "tci-PresentInDCI") is configured for each CORESET.

The TCI field in DCI format 1_1 is 0 bit when a higher layer parameter tci-PresentInDCI is not enabled, and is 3 bits otherwise. If the BWP indicator field indicates a BWP other than an active BWP, the UE follows the following operation.

[Operation] When the higher layer parameter tci-PresentInDCI is not enabled for a CORESET used for a PDCCH transmitting the DCI format 1_1, the UE assumes that tci-PresentInDCI is not enabled for all the CORESETs in the indicated BWP, otherwise, the UE assumes that tci-PresentInDCI is enabled for all the CORESETs in the indicated BWP.

The TCI field in DCI format 1_2 is 0 bit when a higher layer parameter tci-PresentInDCI-1-2 is not configured, and is 1, 2, or 3 bits determined by the higher layer parameter tci-PresentInDCI-1-2 otherwise. If the BWP indicator field indicates a BWP other than an active BWP, the UE follows the following operation.

[Operation] When the higher layer parameter tci-PresentInDCI-1-2 is not configured for a CORESET used for a PDCCH transmitting the DCI format 1_2, the UE assumes that tci-PresentInDCI is not enabled for all the CORESETs in the indicated BWP, otherwise the UE assumes that tci-PresentInDCI-1-2 is configured, for all the CORESETs in the indicated BWP, with the same value as that of tci-PresentInDCI-1-2 configured for the CORESET used for the PDCCH transmitting the DCI format 1_2.

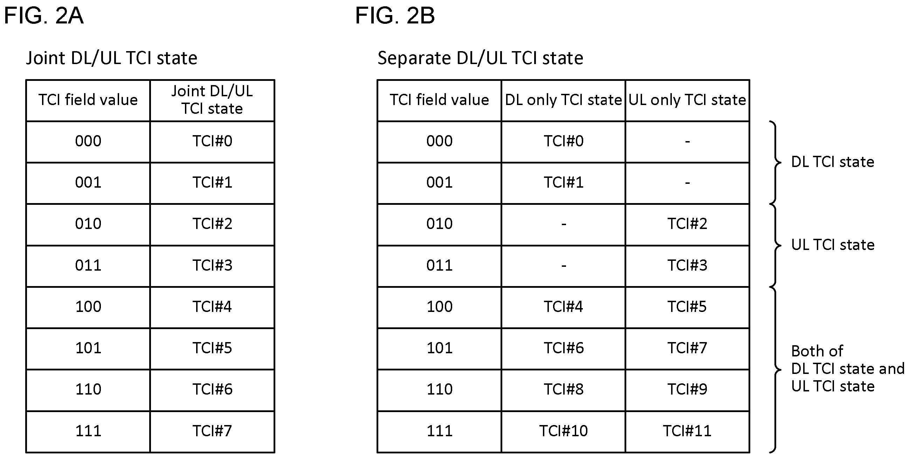

FIG. 2A illustrates an example of a DCI-based joint DL/UL TCI state indication. A TCI state ID indicating a joint DL/UL TCI state is associated with a TCI field value for the joint DL/UL TCI state indication.

FIG. 2B illustrates an example of a DCI-based separate DL/UL TCI state indication. At least one of a TCI state ID indicating only a DL TCI state and a TCI state ID indicating only a UL TCI state is associated with a TCI field value for the separate DL/UL TCI state indication. In this example, TCI field values "000" to "001" are associated with only one DL TCI state ID, TCI field values "010" to "011" are associated with only one UL TCI state ID, and TCI field values "100" to "111" are associated with both one DL TCI state ID and one UL TCI state ID.

### (Indicated TCI State/Configured TCI State)

Regarding the Rel. 17 TCI state, the unified/common TCI state may mean a Rel. 17 TCI state indicated using DCI/MAC CE/RRC (of Rel. 17) (indicated Rel. 17 TCI state).

In the present disclosure, the indicated Rel. 17 TCI state, the indicated TCI state, the unified/common TCI state, the TCI state applied to plural types of signals (channels/RSs), and the TCI state for plural types of signals (channels/RSs) may be interchangeably used with one another.

The indicated Rel. 17 TCI state may be shared with at least one of UE-specific reception in a PDSCH/PDCCH (updated by using the DCI/MAC CE/RRC of Rel. 17), a PUSCH for a dynamic grant (DCI)/configured grant, and a plurality of (for example, all) dedicated PUCCH resources. A TCI state indicated by DCI/MAC CE/RRC may be referred to as the indicated TCI state or the unified TCI state.

Regarding the Rel. 17 TCI state, a TCI state other than the unified TCI state may mean a Rel. 17 TCI state configured using MAC CE/RRC (of Rel. 17) (configured Rel. 17 TCI state). In the present disclosure, the configured Rel. 17 TCI state, the configured TCI state, the TCI state other than the unified TCI state, and a TCI state applied to a specific type of signal (channel/RS) may be interchangeably used with each other.

The configured Rel. 17 TCI state need not be shared with at least one of UE-specific reception in a PDSCH/PDCCH (updated by using the DCI/MAC CE/RRC of Rel. 17), a PUSCH for a dynamic grant (DCI)/configured grant, and a plurality of (for example, all) dedicated PUCCH resources. The configured Rel. 17 TCI state may be configured by RRC/MAC CE for each CORESET/each resource/each resource set, and even when the indicated Rel. 17 TCI state (common TCI state) mentioned above is updated, the configured Rel. 17 TCI state need not be updated.

### (Channel/RS to which Indicated TCI State is Applied)

The indicated TCI state indicated by MAC CE/DCI may be applied to the following channels/RSs.

### [PDCCH]

- When followUnifiedTCIState (following the unified TCI state) is configured for CORESET0, the indicated TCI state is applied. Otherwise, the Rel. 15 specification is applied to the CORESET. That is, CORESET0 follows a TCI state activated by MAC CE or is QCLed with the SSB.
- The indicated TCI state is always applied to a CORESET other than index 0 with USS/CSS type 3.
- When a CORESET other than index 0 with at least a CSS other than CSS type 3 is configured to follow the unified TCI state, the indicated TCI state is applied. Otherwise, the configured TCI state for the CORESET is applied thereto.

### [PDSCH]

- The indicated TCI state is always applied to all UE-dedicated PDSCHs.
- When followUnifiedTCIState is configured for a non-UE-dedicated PDSCH (a PDSCH scheduled by DCI in a CSS) (as for a CORESET of a PDCCH scheduling the PDSCH), the indicated TCI state may be applied. Otherwise, the configured TCI state for the PDSCH is applied thereto. When followUnifiedTCIState is not configured for a PDSCH, whether the non-UE-dedicated PDSCH follows the indicated TCI state may be determined depending on whether followUnifiedTCIState is configured for the CORESET used for scheduling the PDSCH.

### [CSI-RS]

- When followUnifiedTCIState is configured for an A-CSI-RS for CSI acquisition or beam management (as for a CORESET of a PDCCH triggering the A-CSI-RS), the indicated TCI state is applied. The configured TCI state for the other CSI-RS is applied thereto.

### [PUCCH]

- The indicated TCI state is always applied to all dedicated PUCCH resources.

### [PUSCH]

- The indicated TCI state is always applied to dynamic/configured grant PUSCHs.

### [SRS]

- When an SRS resource set for A-SRS for beam management and A/SP/P-SRS for codebook (CB)/non-codebook (NCB)/antenna switching is configured to follow the unified TCI state, the indicated TCI state is applied. The configured TCI state in the SRS resource set is applied to the other SRSs.

### (TCI State Switching)

In Rel. 15/16, a delay time for active TCI state switching is defined for a UE configured with one or more TCI states in a serving cell.

Even when a UE measures/stores/maintains a QCL property, as long as the UE does not perform L1-RSRP reporting/beam reporting to a network (NW, for example, a base station), the NW cannot recognize whether the UE measures/stores/maintains the QCL property. Therefore, the UE needs to perform measurement and reporting of beam/RS such that the UE and the NW have common recognition whether the TCI state is known or unknown.

In Rel. 16, the TCI state being known satisfies the following conditions 0 to 5.

(Condition 0): During a period from the last transmission of an RS resource used for reporting L1-RSRP measurement of a target TCI state to the completion of active TCI state switching, the RS resource for L1-RSRP measurement is an RS of the target TCI state or an RS having a QCL relationship with the target TCI state.

(Condition 1): A TCI state switch indication (TCI state switch command) is received within 1280 ms from the last transmission of an RS resource for beam reporting or measurement.

(Condition 2): At least one L1-RSRP report for the target TCI state has been transmitted by the UE before the TCI state switch indication.

(Condition 3): During the TCI state switching period, the TCI state remains detectable.

(Condition 4): During the TCI state switching period, an SSB associated with the TCI state remains detectable.

(Condition 5): The signal to noise ratio (SNR) of the TCI state is more than or equal to -3 dB.

The TCI state being unknown means that the TCI state is not known.

Note that, in the present disclosure, the TCI state that is known may be referred to as "known TCI state", and the TCI state that is unknown may be referred to as "unknown TCI state".

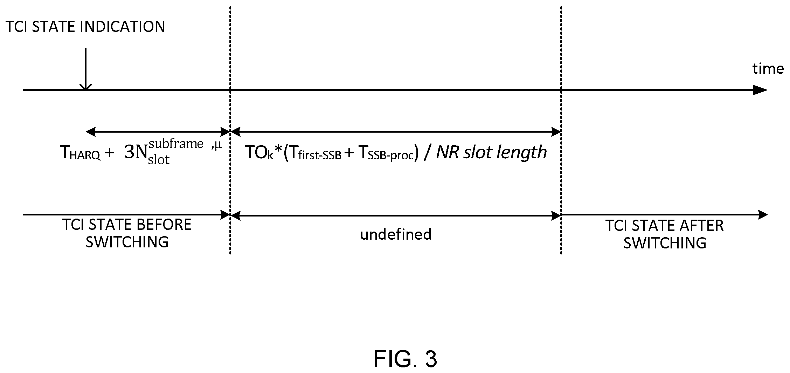

In a case where a MAC CE is used for the TCI state switching (MAC-CE based TCI state switch) and the target TCI state (TCI state of the switching destination) is the known TCI state, when the UE receives a physical downlink shared channel (PDSCH) including a TCI state activation command (TCI state indication) in slot n, the UE receives a physical downlink control channel (PDCCH) with a target TCI state of a serving cell in which the TCI state switching occurs in the first slot after slot n+T_{HARQ}+3N^{subframe,µ}ₛₗₒₜ+TOₖ*(T_{first-SSB}+T_{SSB-proc})/(NR slot length). In addition, the UE can receive the PDCCH with the old (before switching) TCI state until slot n+T_{HARQ}+3N^{subframe,µ}ₛₗₒₜ. During the period from slot n+T_{HARQ}+3N^{subframe,µ}ₛₗₒₜ to slot n+T_{HARQ}+3N^{subframe,µ}ₛₗₒₜ+TOₖ*(T_{first-SSB}+T_{SSB-proc})/(NR slot length), the TCI state to be applied by the UE is not defined (undefined) (refer to FIG. 3).

Here, T_{HARQ} denotes a timing from the transmission of a downlink data signal (for example, PDSCH) to delivery acknowledgement information (for example, HARQ-ACK information). Ns^{ubframe,µs}ₗₒₜ denotes the number of slots per subframe for a subcarrier configuration µ. Tf_{irst-SSB} is the time until the first SSB is transmitted after the UE decodes a MAC CE command used for the TCI state activation. T_{SSB-proc} is 2 ms. TOk is 1 when the target TCI state is not in the list of active TCI states for PDSCH and is 0 otherwise. NR slot length denotes the length of a slot.

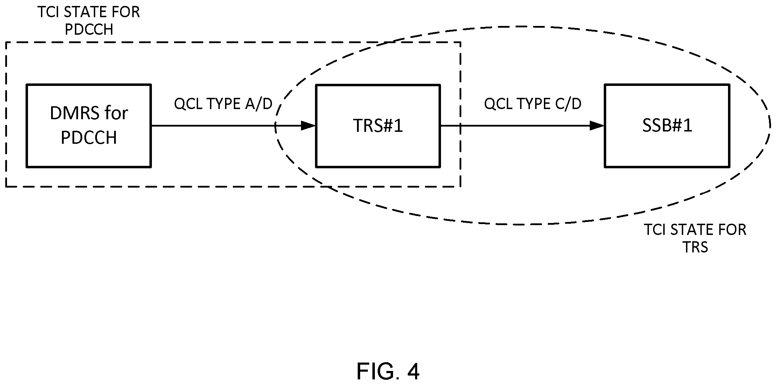

FIG. 4 is a diagram illustrating an example of a TCI state defined up to Rel. 16. As illustrated in FIG. 4, the TCI state for the PDCCH indicates a relationship of QCL type A/D between a demodulation reference signal (DMRS) for the PDCCH and a TRS (or a CSI-RS, here, TRS #1). In addition, the TCI state for the TRS indicates a relationship of QCL type C/D between the TRS and an SSB (here, SSB #1).

In a case where a MAC CE is used for TCI state switching and the target TCI state is the unknown TCI state, when the UE receives a PDSCH including a TCI state activation command in slot n, the UE receives a PDCCH with a target TCI state of a serving cell in which the TCI state switching occurs in the first slot after slot n+T_{HARQ}+3N^{subframe,µ}ₛₗₒₜ+T_{L1-RSRP}+TOᵤₖ*(T_{first-SSB}+T_{SSB-proc})/(NR slot length). In addition, the UE can receive the PDCCH with the old (before switching) TCI state until slot n+T_{HARQ}+3N^{subframe,µ}ₛₗₒₜ.

Here, TOᵤₖ is 1 for L1-RSRP measurement using a CSI-RS or for TCI state switching in which a QCL type other than QCL type D is configured. On the other hand, TOᵤₖ is 0 for TCI state switching in which at least QCL type D is configured and for L1-RSRP measurement using an SSB.

In addition, T_{first-SSB} is the time until the first SSB is transmitted after the L1-RSRP measurement when the TCI state switching in which at least QCL type D is configured is performed. Alternatively, T_{first-SSB} is the time until the first SSB is transmitted after the UE decodes a MAC CE command used for the TCI state activation in which a QCL type other than QCL type D is configured.

Compared to a case where the target TCI state is the known TCI state, when the target TCI state is the unknown TCI state, an additional time of T_{L1-RSRP} is required for the TCI state switching. TL_{1-RSRP} is the time related to received power measurement. TL_{1-RSRP} is 0 for Frequency Range (FR)1 or for FR2 in which QCL type D is not configured. Otherwise, T_{L1-RSRP} is the time required for determination/refinement of a reception beam in FR2.

In a case where downlink control information (DCI) is used for the TCI state switching (DCI based TCI state switch) and the target TCI state is the known TCI state, when the higher layer parameter tci-PresentInDCI for a CORESET scheduling a PDSCH is configured as enabled for the UE in slot n, the PDSCH with the target TCI state in a serving cell in which the TCI state switching occurs is received in the first slot after slot n+timeDurationForDCI. Here, timeDurationForDCI is the time required for receiving a PDCCH and applying information regarding spatial relation/QCL (spatial QCL information) to the reception of DCI for a PDSCH.

Further, in a case where RRC signaling is used for the TCI state switching (RRC based TCI state switch) and the target TCI state is the known TCI state, when the UE receives a PDSCH including a TCI state RRC activation command in slot n, the UE receives a PDCCH with a target TCI state of a serving cell in which the TCI state switching occurs in the first slot after slot n+(T_{RRC_processing}+TOₖ*(T_{first-SSB}+T_{SSB-proc}))/(NR slot length).

Here, T_{RRC_processing} is a delay regarding RRC processing (RRC processing delay). Tf_{irst-SSB} is the time until the first SSB is transmitted after the RRC processing of the UE. TS_{SB-proc,} TOₖ, and (NR slot length) have the same meaning as those of the known TCI state in the TCI state switching for MAC CE.

In addition, in a case where RRC signaling is used for the TCI state switching (RRC based TCI state switch) and the target TCI state is the unknown TCI state, when the UE receives a PDSCH including a TCI state RRC activation command in slot n, the UE receives a PDCCH with a target TCI state of a serving cell in which the TCI state switching occurs in the first slot after slot n+(T_{RRC_processing}+T_{L1-RSRP}+TOᵤₖ*(T_{first-SSB}+T_{SSB-proc}))/(NR slot length).

Here, T_{RRC_processing} is a delay regarding RRC processing (RRC processing delay). TS_{SB-proc,} TOᵤₖ, and (NR slot length) have the same meaning as those of the unknown TCI state in the TCI state switching for MAC CE.

In addition, T_{first-SSB} is the time until the first SSB is transmitted after the L1-RSRP measurement when the TCI state switching in which at least QCL type D is configured is performed. Alternatively, T_{first-SSB} is the time until the first SSB is transmitted after the UE decodes a MAC CE command used for the TCI state activation in which a QCL type other than QCL type D is configured.

In Rel. 17, a delay time for switching related to a unified TCI state is defined.

For example, when the UE is configured with a RRC parameter (DLorJoint-TCIState) regarding a unified TCI state for a DL channel of a serving cell, the defined delay time may be applied.

In an MR-DC or standalone NR, the delay time is also applied to all lists of a plurality of serving cells in the simultaneous TCI update lists of a plurality of CCs/cells (for example, simultaneousU-TCI-UpdateList1, simultaneousU-TCI-UpdateList2, simultaneousU-TCI-UpdateList3, simultaneousU-TCI-UpdateList4).

When the target DL TCI state refers to an additional PCI different from the physical cell ID (PCI) of the serving cell in which the DL TCI state is configured, the delay time may be applied provided that the following conditions are satisfied.
- The serving cell and the cell with the additional PCI have the same active BWP.
- The central frequency, the subcarrier spacing (SCS), and the system frame number (SFN) offset of the cell with the additional PCI are the same as those of the serving cell.
- The cell with the additional PCI is known to the UE.

In addition, when the following conditions are satisfied, the cell with the additional PCI may be known.
- The UE has transmitted a valid L3 measurement report to the cell with the additional PCI within (last) 5 seconds immediately before the L1-RSRP measurement is configured.
- The timing offset between the serving cell and the cell with the additional PCI is within the CP of the corresponding SCS.

When this condition is not satisfied, the cell with the additional PCI may be unknown.

The DL TCI state in the unified TCI state being known may be defined by satisfying the following conditions.
- During a period from the last transmission of an RS resource used for reporting L1-RSRP measurement of a target DL TCI state to the completion of active DL TCI state switching, the RS resource for L1-RSRP measurement is an RS of the target DL TCI state or an RS having a QCL relationship with the target DL TCI state.
- A DL TCI state switch indication (downlink TCI state switch command) is received within 1280 ms from the last transmission of an RS resource for beam reporting or measurement.
- At least one L1-RSRP report for the target DL TCI state has been transmitted by the UE before the DL TCI state switch indication.
- During the DL TCI state switching period, the DL TCI state remains detectable.
- During the DL TCI state switching period, an SSB associated with the DL TCI state remains detectable.
- The signal to noise ratio (SNR) of the DL TCI state is more than or equal to -3 dB.

The SSB may be associated with the PCI of the serving cell or a PCI different from that of the serving cell.

When this condition is not satisfied, the DL TCI state may be unknown.

Unless a target PL-RS is maintained during the joint TCI state switching, the UE may not be expected to receive in the DL based on the target TCI state before completion of the DL and UL TCI state switching.

In a case where a MAC CE is used for the switching of a DL TCI state (MAC-CE based downlink TCI state switch) and the target TCI state (TCI state of the switching destination) is the known TCI state, when the UE receives a PDSCH including a TCI state activation command (TCI state indication) in slot n, the UE receives a physical downlink control channel (PDCCH) with a target TCI state of a serving cell in which the TCI state switching occurs in the first slot after slot n+T_{HARQ}+3N^{subframe,µ}ₛₗₒₜ+TOₖ*(T_{first-SSB}+T_{SSB-proc})/(NR slot length). In addition, the UE can receive the UE-specific PDSCH/PDCCH using the old (before switching) TCI state until slot n+T_{HARQ}+3N^{subframe,µ}ₛₗₒₜ. During the period from slot n+T_{HARQ}+3N^{subframe,µ}ₛₗₒₜ to slot n+T_{HARQ}+3N^{subframe,µ}ₛₗₒₜ+TOₖ*(T_{first-SSB}+T_{SSB-proc})/(NR slot length), the TCI state to be applied by the UE is not defined.

Here, T_{HARQ} denotes a timing from the transmission of a downlink data signal (for example, PDSCH) to delivery acknowledgement information (for example, HARQ-ACK information). Ns^{ubframe,µs}ₗₒₜ denotes the number of slots per subframe for a subcarrier configuration µ. T_{first-SSB} is the time until the first SSB is transmitted after the UE decodes a MAC CE command used for the TCI state activation. T_{SSB-proc} is 2 ms. TOk is 1 when the target TCI state is not in the list of active TCI states for PDSCH and is 0 otherwise. NR slot length denotes the length of a slot.

In a case where a MAC CE is used for DL TCI state switching and the target TCI state is the unknown TCI state, when the UE receives a PDSCH including a TCI state activation command in slot n, the UE receives a PDCCH with a target TCI state of a serving cell in which the TCI state switching occurs in the first slot after slot n+T_{HARQ}+3N^{subframe,µ}ₛₗₒₜ+T_{L1-RSRP}+TOᵤₖ*(T_{first-SSB}+T_{SSB-proc})/(NR slot length). In addition, the UE can receive the UE-specific PDSCH/PDCCH using the old (before switching) TCI state until slot n+T_{HARQ}+3N^{subframe,µ}ₛₗₒₜ.

Here, TOᵤₖ is 1 for L1-RSRP measurement using a CSI-RS or for TCI state switching in which a QCL type other than QCL type D is configured. On the other hand, TOᵤₖ is 0 for TCI state switching in which at least QCL type D is configured and for L1-RSRP measurement using an SSB.

In addition, T_{first-SSB} is the time until the first SSB is transmitted after the L1-RSRP measurement when the TCI state switching in which at least QCL type D is configured is performed. Alternatively, T_{first-SSB} is the time until the first SSB is transmitted after the UE decodes a MAC CE command used for the TCI state activation in which a QCL type other than QCL type D is configured.

Compared to a case where the target TCI state is the known TCI state, when the target TCI state is the unknown TCI state, an additional time of T_{L1-RSRP} is required for the TCI state switching. TL_{1-RSRP} is the time related to received power measurement. TL_{1-RSRP} is 0 for Frequency Range (FR)1 or for FR2 in which QCL type D is not configured. Otherwise, T_{L1-RSRP} is the time required for determination/refinement of a reception beam in FR2.

In addition, for example, when the UE is configured with a RRC parameter (DLorJoint-TCIState (in a case where unifiedTCI-StateType indicates Joint) or UL-TCIState) regarding a unified TCI state for a UL channel/signal of a serving cell, the defined delay time may be applied.

In an MR-DC or standalone NR, the delay time is also applied to all lists of a plurality of serving cells in the simultaneous TCI update lists of a plurality of CCs/cells (for example, simultaneousU-TCI-UpdateList1, simultaneousU-TCI-UpdateList2, simultaneousU-TCI-UpdateList3, simultaneousU-TCI-UpdateList4).

Regarding UL TCI state (or the joint TCI state), the known/unknown of the cell with the additional PCI and the known/unknown of the UL TCI state are the same as those regarding the DL TCI state, except that "DL TCI state" is replaced with "UL TCI state (or joint TCI state)".

In the case of joint TCI state switching, the UE may not be expected to transmit in the UL before completion of the DL and UL TCI state switching.

In a case where a MAC CE is used for the separate UL TCI state/joint TCI state switching for a UL channel/signal (MAC-CE based uplink TCI state switch) and the target TCI state (TCI state of the switching destination) is the known TCI state, when the UE receives a PDSCH including a TCI state activation command (TCI state indication) in slot n, a UL signal of the target TCI state can be transmitted in slot n+T_{HARQ}+3N^{subframe,µ}ₛₗₒₜ+NM*(T_{first-target-PL-RS}+4*T_{target-PL-RS}+2ms)/(NR slot length). Here, the UL channel/signal may be a PUCCH, a PUSCH, or a semi-persistent/periodic/aperiodic SRS (when beamCorrespondenceWithoutUL-BeamSweeping is set to 1).

In a case where a MAC CE is used for the separate UL TCI state/joint TCI state switching for a UL channel/signal and the target TCI state is the unknown TCI state, when the UE receives a PDSCH including a TCI state activation command (TCI state indication) in slot n, a UL signal of the target TCI state can be transmitted in slot n+T_{HARQ}+3N^{subframe,µ}ₛₗₒₜ+(T_{L1-RSRP}+T_{first-target-PL-RS}+4*T_{target-PL-RS}+2ms)/(NR slot length).

Here, T_{HARQ} denotes a timing from the transmission of a downlink data signal (for example, PDSCH) to delivery acknowledgement information (for example, HARQ-ACK information). Ns^{ubframe,µs}ₗₒₜ denotes the number of slots per subframe for a subcarrier configuration µ. NR slot length denotes the length of a slot.

NM is 1 when a target PL-RS is maintained, and is 0 otherwise.

T_{target-PL-RS} is the time until the first path-loss RS is transmitted after L1-RSRP measurement when the target TCI state is unknown. In addition, T_{target-PL-RS} is the time until the first path-loss RS is transmitted after a MAC CE command is decoded by the UE when the target TCI state is known.

T_{target-PL-RS} is the periodicity of a target PL-RS that is an SSB or an NZP CSI-RS when the PL-RS is related to the serving cell. Tt_{arget-PL-RS} is the periodicity of the PL-RS that is an SSB when the PL-RS is related to a PCI different from that of the serving cell.

Compared to a case where the target TCI state is the known TCI state, when the target TCI state is the unknown TCI state, an additional time of T_{L1-RSRP} is required for the TCI state switching. TL_{1-RSRP} is the time related to received power measurement. TL_{1-RSRP} is 0 for Frequency Range (FR)1 or for FR2 in which QCL type D is not configured. Otherwise, T_{L1-RSRP} is the time required for determination/refinement of a reception beam in FR2.

### (L1/L2 Inter-Cell Mobility)

Furthermore, it is being studied that the UE performs UL transmission to one or a plurality of cells/TRPs. As a procedure in this case, the following scenario 1 or 2 is considered. Note that, in the present disclosure, the serving cell may be interchangeable with a TRP in the serving cell. Layer1/layer2 (L1/L2) and DCI/Medium Access Control Control Element(MAC CE) may be interchangeable with each other. In the present disclosure, a PCI different from the physical cell ID (Physical cell Identity (PCI)) of the current serving cell may be simply referred to as a "different PCI". A non-serving cell, a cell having a different PCI, and an additional cell may be interchangeable with each other.

### <Scenario 1>

For example, Scenario 1 corresponds to multi-TRP inter-cell mobility, but may be a scenario that does not correspond to multi-TRP inter-cell mobility.

(1) The UE receives, from the serving cell, a configuration of an SSB for beam measurement of a TRP corresponding to a PCI different from that of the serving cell and a configuration required for using radio resources, including a resource of the different PCI, for data transmission and reception.
(2) The UE performs beam measurement of the TRP corresponding to the different PCI, and reports the beam measurement result to the serving cell.
(3) Based on the report, a transmission configuration indication (TCI) state associated with a TRP corresponding to the different PCI is activated by L1/L2 signaling from the serving cell.
(4) The UE performs transmission and reception using a UE-dedicated channel on the TRP corresponding to the different PCI.
(5) The UE needs to be within the coverage of the serving cell at all times, including multi-TRP cases. As in the legacy system, the UE needs to use a common channel (BCCH: Broadcast Control Channel) from the serving cell, a paging channel (PCH), or the like.

In Scenario 1, when the UE transmits or receives signals to or from the additional cell/TRP (the TRP corresponding to the PCI of the additional cell), the serving cell (the assumption of the serving cell in the UE) is not changed. The UE is configured with higher layer parameters related to the PCI of a non-serving cell from the serving cell. Scenario 1 may be applied, for example, in Rel. 17.

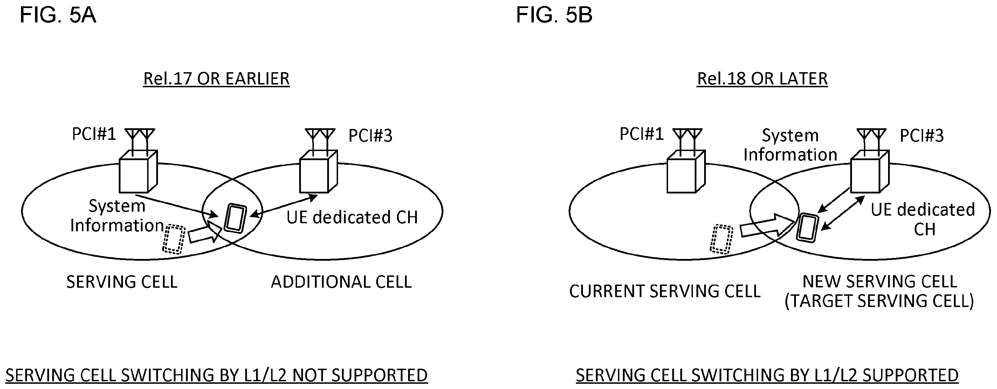

FIG. 5A is a diagram illustrating an example of movement of the UE in Rel. 17. It is assumed that the UE moves from a cell with PCI #1 (serving cell) to a cell with PCI #3 (additional cell) (overlapping with the serving cell). In this case, in Rel. 17, L1/L2-based serving cell switching is not supported.

The additional cell is a cell having an additional PCI different from the PCI of the serving cell. The UE can receive/transmit UE-specific channels from/to the additional cell. The UE needs to be within the coverage of the serving cell to receive UE-common channels (for example, system information/paging/short messages). When the UE moves outside of the coverage of the serving cell, cell switching by handover (also referred to as L3 mobility) or the like is necessary.

### <Scenario 2>

In Scenario 2, L1/L2 inter-cell mobility is applied. In the L1/L2 inter-cell mobility, a serving cell can be changed using a function such as beam control without reconfiguring RRC. In other words, transmission and reception with the additional cell can be performed without handover. For example, handover requires RRC reconnection, which leads to a data communication interruption period. Therefore, by applying L1/L2 inter-cell mobility which does not require handover, data communication can be continued even during a serving cell change. Scenario 2 may be applied, for example, in Rel. 18. In Scenario 2, for example, the following procedure is performed.
(1) The UE receives, from the serving cell, an SSB configuration of a cell (additional cell) with a different PCI for beam measurement/serving cell change.
(2) The UE performs beam measurement of the cell with the different PCI, and reports the measurement result to the serving cell.
(3) The UE may receive the configuration (serving cell configuration) of the cell with the different PCI via higher layer signaling (for example, RRC). That is, a preconfiguration regarding a serving cell change may be performed. This configuration may be performed together with or separately from the configuration in (1).
(4) Based on the report, the TCI state of the cell with the different PCI may be activated via L1/L2 signaling in accordance with the serving cell change. The TCI state activation and the serving cell change may be separately performed.
(5) The UE changes the serving cell (the assumption of the serving cell), and initiates reception/transmission using preconfigured UE-dedicated channels and TCI states.

That is, in Scenario 2, the serving cell (the assumption of the serving cell in the UE) is updated via L1/L2 signaling. Scenario 2 may be applied in Rel. 18.

FIG. 5B is a diagram illustrating an example of movement of the UE in Rel. 18. In Rel. 18, the serving cell is switched via L1/L2 (for example, DCI/MAC CE). The UE can receive/transmit the UE-specific channel/common channel to/from the new serving cell (or the target serving cell). The UE may deviate from the coverage of the current serving cell (for example, Current serving cell).

### (Type of Beam Reporting)

### <Rel. 15/16 Intra-Cell Beam Reporting>

In Rel. 15/16, intra-cell beam reporting is supported. For example, L1-RSRP/SINR reporting may be configured by higher layer signaling (RRC).

For example, in L1-RSRP computation, when a resource is associated with QCL type C/type D, the UE may be configured with CSI-RS resources, SS/PBCH block resources, or both.

In addition, the UE may be configured with up to 16 CSI-RS resource sets, each including up to 64 resources. The total number of different CSI-RS resources across all resource sets is less than or equal to 128.

In L1-RSRP reporting, when the higher layer parameter nrofReportedRS (for example, in CSI-ReportConfig) is configured as 1, the reported L1-RSRP value is defined as a 7-bit value in the range of [-140, -44] dBm with a step size of 1 dB.

Here, the maximum measured value of L1-RSRP is quantized as a 7-bit value in the range of [-140, -44] dBm with a step size of 1 dB. In addition, the differential value of L1-RSRP is quantized as a 4-bit value.

The differential value is calculated with a step size of 2 dB with reference to the maximum measured value that is part of the same L1-RSRP reporting instance.

For example, in L1-SINR computation and channel measurement, the UE may be configured with NZP CSI-RS resources, SS/PBCH block resources, or both. In addition, for interference measurement, the UE may be configured with NZP CSI-RS resources or CSI-IM resources.

In channel measurement, the UE may be configured with a CSI resource setting regarding up to 16 CSI-RS resource sets, each including up to 64 CSI resources or SS/PBCH block resources.

In L1-SINR reporting, when the higher layer parameter nrofReportedRS is configured as 1, the reported L1-SINR value is defined as a 7-bit value in the range of [-23, 40] dBm with a step size of 0.5 dB.

When the higher layer parameter nrofReportedRS is configured to be more than 1, or when the higher layer parameter groupBasedBeamReporting is configured to be "enabled", the UE utilizes the differential value-based L1-SINR value for reporting.

The differential value is calculated with a step size of 1 dB with reference to the maximum measured value that is part of the same L1-SINR reporting instance.

In the present disclosure, Rel. 15/16 intra-cell beam reporting (which may be simply referred to as intra-cell beam reporting) may be referred to as Type 1 beam reporting (beam reporting Type 1) or beam reporting for intra-cell beam switching.

### <Rel. 17 Inter-Cell Beam Reporting>

As described above, in Rel. 17, L1/L2 inter-cell mobility is supported. For example, the UE can transmit or receive UL/DL channels/signals associated with a PCI of a cell different from a PCI of a serving cell. For example, when a non-serving cell has a higher RSRP than a serving cell, the UE can transmit or receive UL/DL channels/signals to or from the non-serving cell without performing a handover.

In L1-RSRP reporting, an absolute value/differential value of L1-RSRP may be used similarly to Rel. 15/16. In inter-cell beam reporting of Rel. 17 (Type 2-1 beam reporting described below), each L1-RSRP value and a PCI ID (for a serving cell/additional cell/candidate cell) are associated with each other. The association between the L1-RSRP value and the PCI ID may be configured/indicated by higher layer signaling/physical layer signaling.

The configuration by higher layer signaling supports up to seven additional cells. Note that ID=0 indicates the PCI of the serving cell.

In the present disclosure, inter-cell beam reporting (in Rel. 17/18) may also be referred to as Type 2 beam reporting (beam reporting Type 2). Type 2 beam reporting can be further classified into Type 2-1 and Type 2-2 described below.

In the present disclosure, Rel. 17 beam reporting may be referred to as Type 2-1 beam reporting or beam reporting for inter-cell beam switching.

### <Rel. 18 Inter-Cell Beam Reporting>

In addition, in Rel. 18 beam reporting, only SSB-based L1-RSRP reporting (beam reporting) is supported. Here, the number of candidate cells may be any one of 1 to 4, and the number M of beams for each (per) cell may be any one of 1 to 4. For example, in beam reporting, a 7-bit absolute value (maximum L1-RSRP value in all cells) is reported for one cell, and all the remaining L1-RSRP values are reported as differential values.

Regarding beam selection in SSB-based L1-RSRP reporting, the maximum value of M*L configurable via RRC for M and L described above and a combination of M and L may depend on UE capability.

In L1-RSRP reporting, an absolute value/differential value of L1-RSRP may be used similarly to Rel. 15/16/17.

In L1-RSRP reporting, the reported L1-RSRP value is defined as a 7-bit value in the range of [-140, -44] dBm with a step size of 1 dB.

Here, the maximum measured value of L1-RSRP is quantized as a 7-bit value in the range of [-140, -44] dBm with a step size of 1 dB. In addition, the differential value of L1-RSRP is quantized as a 4-bit value.

The differential value is calculated with a step size of 2 dB with reference to the maximum measured value that is part of the same L1-RSRP reporting instance.

L1-RSRP reporting includes a SSBRI across configured candidate cells. That is, L1-RSRP reporting includes L1-RSRP corresponding to the SSBRI of the configured candidate cells. The format may be the same as that of the existing specifications.

In the present disclosure, Rel. 18 beam reporting may be referred to as Type 2-2 beam reporting or beam reporting for cell switching. Note that Type 2-2 beam reporting does not include information (PCI ID) regarding PCI. Instead, the SSBRI may include information regarding PCI. For example, when four cells include 64 SSBs, the SSBRI may be one of {0, 1,..., 255}.

### (Event-Based Beam Reporting)

In future radio communication systems, it is being studied to support event-based beam reporting. The event-based beam reporting may be referred to as event triggered beam reporting or event driven beam reporting, and may mean UE-initiated beam reporting.

### <Applicable Case>

The event-based beam reporting may be applied to, for example, at least one of the following Case 1 or Case 2.
- [Case 1]: L1-RSRP/SINR beam reporting including serving cell PCI/additional PCI (for example, L1-RSRP/SINR beam reporting including serving cell/additional PCI cell for Rel. 18 L1/L2 mobility with L1/L2 intra-cell mobility/intra-cell multi-TRP (M-TRP intra-cell)/cell switching).
- [Case 2]: L1-RSRP/SINR beam reporting including only serving cell PCI.

When a specific event occurs (in the present disclosure, which may be interchangeable with "when a specific condition is satisfied/is not satisfied"), the UE may perform measurement result (for example, L1-RSRP/L1-SINR) reporting to the NW (for example, the base station).

The specific event may be, for example, at least one of an event regarding at least one of a serving cell and an additional cell and an event regarding beam reporting including at least one of a PCI of a serving cell and a PCI of an additional cell.

### <<Event Regarding Case 1>>

An example of an event for Case 1 will be described. The event may mean, for example, an event regarding a serving cell and an additional cell or an event regarding beam reporting including a PCI of a serving cell and a PCI of an additional cell.

### [Option 1]

Beam reporting (for example, aperiodic CSI reporting) may be triggered by reusing one or a plurality of existing events of radio resource management (RRM) (for example, at least one of the following Events A2 to A6 and I1). That is, when at least one of the following Events A2 to A6 and I1 occurs (when a condition of the event is satisfied), both RRM reporting and CSI reporting may be triggered, and the UE may transmit both RRM reporting and CSI reporting.

Note that, in the present disclosure, the RRM reporting may be interchangeable with L3 measurement reporting.

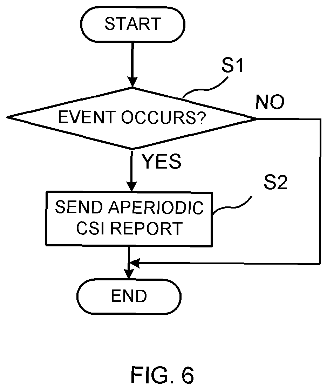

FIG. 6 is a flowchart illustrating an example of processing for the event-based beam reporting. The UE determines whether an event (for example, at least one of the following Events A2 to A6 and I1) occurs (S1). When YES in S1, the UE transmits aperiodic CSI reporting (and RRM reporting) (S2), and when NO in S1, the UE ends the processing regarding the event-based beam reporting. The processing in FIG. 6 may be repeatedly performed at a predetermined period.

In the present disclosure, the triggering of aperiodic CSI reporting and the transmission of aperiodic CSI reporting by the UE may be interchangeable with each other. In the present disclosure, CSI reporting, L1 beam reporting, and beam reporting may be interchangeable with each other.

In the following Events A2 to A6, the measurement result may be a measurement result of at least one of RSRP(L1-RSRP/L3-RSRP), RSRQ, and SINR (RS-SINR). In the conditions for the following Events A2 to A6, "bad" may mean "low", and "good" may mean "high". In the conditions for the following Events A2 to A6, SpCell may mean a special cell, and may mean at least one of a primary cell (Pcell) and a primary secondary cell (PSCell). In the following Events A2 to A6 and I1, a parameter corresponding to hysteresis may be added to/subtracted from the measurement results. The thresholds may be the same as or different from each other. A neighboring cell may be a non-serving cell.

Event A2: the measurement result of the serving cell is worse than a threshold.

Event A3: the measurement result of the neighboring cell (a value obtained by adding an offset to the measurement result) is better than the measurement result of the SpCell (a value obtained by adding an offset to the measurement result).

Event A4: the measurement result of the neighboring cell (the value obtained by adding an offset to the measurement result) is better than a threshold.

Event A5: the measurement result of the SpCell is worse than a first threshold, and the measurement result of the neighboring cell (a value obtained by adding an offset to the measurement result) is better than a second threshold.

Event A6: the measurement result of the neighboring cell (a value obtained by adding an offset to the measurement result) is better than the measurement result of the serving cell (Secondary Cell (Scell)) (a value obtained by adding an offset to the measurement result).

Event I1: the measurement result of interference is higher than a threshold.

According to Option 1, the trigger of RRM reporting can be reused as the trigger of beam reporting, which facilitates the configuration.

### [Option 2]

One or a plurality of new events (separate from the event for RRM reporting) may be defined, and aperiodic L1 beam reporting (CSI reporting) may be triggered. The event is similar to Events A2 to A6 and I1 that are applied to the trigger of RRM reporting, but may be different from any of Events A2 to A6 and I1 (the trigger of RRM reporting) in at least one of the following Options 2-1 to 2-4.

### [[Option 2-1]]

The threshold may be different. That is, using a threshold different from that of RRM reporting, Events A2 to A6 and I1 may be used for L1 beam reporting (CSI reporting).

### [[Option 2-2]]

The event may occur based on a measurement result of reference signal received power (L1-RSRP) in the layer 1. That is, comparison based on L1-RSRP instead of L3-RSRP may be performed. Alternatively, newly filtered L1-RSRP where a timescale (update/measurement periodicity) is between L1-RSRP and L3-RSRP (or may be the same as L1-RSRP or L3-RSRP), may be applied. Alternatively, other metrics, for example, L1-SINR or L3-RSRQ may be applied. For example, the following Event A2' may be applied as a new event.

Event A2': the L1-RSRP measurement result of the serving cell is worse than a threshold.

### [[Option 2-3]]

The event may occur based on comparison of measurement results at one beam level, a plurality of beam levels (a plurality of independent beam measurement results are integrated into one value), or a cell level. For example, the following Event A4' or Event A4ʺ may be applied.

Event A4': the measurement result of one beam from a neighboring cell is better than a threshold.

Event A4ʺ: the statistical value (for example, an average value or a total value) of the measurement results of a plurality of beams (for example, best X beams) is better than a threshold. X may be fixed or may be configurable via higher layer signaling or the like.

### [[Option 2-4]]

The number of beams satisfying a condition (for example, any of Events A2 to A6 and I1) may be considered. For example, when X beams satisfy Event A4' (when the measurement results of X beams from a neighboring cell are better than a threshold), the UE may perform CSI reporting.

Note that an example of combining at least two of 2-1 to 2-4 may be applied. For example, A4‴ may be considered as an event of combining 2-2 and 2-3. In addition, A4ʺʺ may be considered as an event of combining 2-2, 2-3, and 2-4.

Event A4‴: the L1-RSRP measurement result of one beam from a neighboring cell is better than a threshold.

Event A4ʺʺ: the L1-RSRP of each of the X beams from a neighboring cell is better than a threshold.

According to Option 2, CSI reporting can be performed more rapidly compared to a case where an event for existing RRM reporting using RRC is used.

### [Option 3]

Using any combination of two or more events of Option 1 and Option 2, aperiodic L1 beam reporting (CSI reporting) may be triggered.

An existing event for RRM reporting and one or more events for Option B may be combined. For example, when both Event A4 and the new Event A4‴ occur, CSI reporting may be triggered.

Two or more events of Option 2 may be combined. For example, when both Event A2' and the new Event A4‴ are satisfied, CSI reporting may be triggered.

### <<Event Regarding Case 2>>

An example of an event for Case 2 above will be described. The event may mean, for example, an event regarding only a serving cell or an event regarding beam reporting including only a PCI of a serving cell.

One or a plurality of new events (separate from the event for RRM reporting) may be defined, and aperiodic L1 beam reporting (CSI reporting) may be triggered. The event may be at least one of the following Events B2 to B6 and K1.

Event B2: the measurement result of the current beam is worse than a threshold.

Event B3: the measurement result of another beam (a value obtained by adding an offset to the measurement result) is better than the measurement result of the current beam (a value obtained by adding an offset to the measurement result).

Event B4: the measurement result of another beam (the value obtained by adding an offset to the measurement result) is better than a threshold.

Event B5: the measurement result of the current beam is worse than a first threshold, and the measurement result of another beam (a value obtained by adding an offset to the measurement result) is better than a second threshold.

Event B6: the measurement result of the current beam (the value obtained by adding an offset to the measurement result) is worse than a threshold, and the measurement result of another beam (a value obtained by adding an offset to the measurement result) is better than the measurement result of the current beam (a value obtained by adding an offset to the measurement result).

Event K1: the measurement result of interference is higher than a threshold.

Note that, the names/symbols (for example, A2-A6, B2-B6, I1, or K1) related to the events in the present disclosure are merely examples and are not limited to these examples. For example, the name of an event regarding Case 2 may be the same as the name of the corresponding event regarding Case 1 (with the same number).

Note that, regarding at least one of the events (the events related to Case 1/Case 2) in the present disclosure, a duration/counter for which the event (the condition thereof) is satisfied may be defined. When at least one of the conditions of the events satisfies a condition regarding a specific duration/counter, the UE/NW may determine that the condition of the event is satisfied. For example, when the measurement result of another beam is better than the measurement result of the current beam within a time window of 100 ms, the UE may determine that the condition of Event B3 is satisfied. In addition, for example, when the measurement results of another beam are better than the measurement result of the current beam for 10 times out of a plurality of samples, the UE may determine that the condition of Event B3 is satisfied.

In the present disclosure, the "current beam" may mean, for example, an SSB/CSI-RS that is QCLed with the PDCCH.

The PDCCH may be, for example, a PDCCH corresponding to a CORESET determined by a specific rule/higher layer parameter configuration. The CORESET may be a CORESET with a specific (for example, minimum/maximum) CORESET ID.

The CSI-RS may be, for example, a periodic/semi-persistent/aperiodic CSI-RS. The SSB/CSI-RS may be limited to, for example, periodic CSI-RS/SSB.

In addition, in the present disclosure, the "current beam" may be, for example, an indicated TCI state (joint/DL/UL TCI state) in the current unified TCI state. In addition, the "current beam" may be, for example, a QCL source RS (QCL type D/A) regarding the current indicated TCI state.

In addition, in the present disclosure, the "current beam" may be, for example, a beam/resource index (for example, CRI/SSBRI) reported in a specific (for example, recent/latest L1-RSRP/L1-SINR).

In the present disclosure, "another beam" may be, for example, a beam/SSB/CSI-RS/TCI state other than the "current beam".

The UE may be configured with a set of a plurality of beams (a set of candidate beams). The UE may select/determine "another beam" from the set.

In the present disclosure, "bad (worse)/good (better)" may mean, for example, a low (lower)/high (higher) measurement result (for example, RSRP/SINR/RSRQ).

The threshold may be predefined in the specifications, may be configured/indicated/notified using higher layer signaling (RRC/MAC CE)/DCI, may be reported based on the UE capability, or may be defined by a combination thereof. For example, as the threshold, an existing threshold (for example, a threshold used in RRM/Case 1) may be reused.

The offset regarding the threshold may be predefined in the specifications, may be configured/indicated/notified using higher layer signaling (RRC/MAC CE)/DCI, may be reported based on the UE capability, or may be defined by a combination thereof.

Note that, in the present disclosure, UE-initiated beam reporting, event-triggered beam reporting, event-driven beam reporting, and event-based beam reporting may be interchangeable with each other.

In the present disclosure, a beam to be reported, a reported beam, and a UE-reported beam may be interchangeable with each other.

### (Rel. 18 Cell Switching Command (MAC CE))

The cell switching command transmitted via a MAC CE may include at least the following information.
- Information for identifying a target cell
- Information regarding a timing advance (TA)
- One joint TCI state index for a target cell, or a set of DL/UL TCI state indices for the target cell
- An active DL/UL BWP for a target cell

Regarding the presence of a beam indication in the cell switching command, the following may be supported for at least one scenario.
- In the cell switching command, a field indicating one joint TCI state index for a target cell, or a set of DL/UL TCI state indices for the target cell is always present.
- A UE operation regarding a beam indication field in a RACH-based handover scenario after the cell switching command.

### (Analysis)

As described above, in future radio communication systems (for example, Rel. 19 or later), from the viewpoint of overhead/delay reduction, while assuming the unified TCI framework and utilizing the configuration framework of the existing CSI measurement/reporting as much as possible, the introduction of UE-initiated/event-driven beam management is being studied.

The beam management may target, for example, Frequency Range 2 (FR2) and single TRP involving beam management for intra-cel/inter-cell beam management.

Specifically, in order to facilitate high-speed beam switching, content of UL signaling for UE-initiated/event-driven beam reporting, a medium/container of a UL signal in consideration of properties of UE-initiated/event-driven beam management for UL transmission, and the like are being studied, but these studies are not sufficient.

In addition, there have been no sufficient studies on how the UE recognizes whether or not UE-initiated/event-driven beam reporting has been received by a network (NW, for example, a base station) side, and on an operation of the UE when the UE recognizes a failure of the beam reporting.

When such study is not sufficient, lower-latency communication cannot be realized, which may inhibit the improvement of communication quality/throughput.

Under these circumstances, the present inventors conceived a new method of beam reporting regarding mobility.

### (Various Replacements and the like)

Hereinafter, embodiments according to the present disclosure will be described in detail with reference to the drawings. The radio communication method according to each of the embodiments may be applied independently, or may be applied in combination with others.

In the present disclosure, "A/B" and "at least one of A or B" may be interchangeable with each other. Furthermore, in the present disclosure, "A/B/C" may mean "at least one of A, B, and C".

In the present disclosure, notify, activate, deactivate, instruct (or indicate), select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, a higher layer parameter, a field, an information element (IE), a configuration, and the like may be interchangeable with each other. In the present disclosure, a Medium Access Control control element (MAC control element (CE)), an update command, an activation/deactivation command, and the like may be interchangeable with each other.

In the present disclosure, higher layer signaling may be, for example, any of radio resource control (RRC) signaling, medium access control (MAC) signaling, broadcast information, other messages (for example, a message from a core network, such as a positioning protocol (for example, NR Positioning Protocol A (NRPPa)/LTE Positioning Protocol (LPP)) message), or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeable with each other. In the present disclosure, a sequence, a list, a set, a group, a cohort, a cluster, a subset, and the like may be interchangeable with each other.

In the present disclosure, a panel, a UE panel, a panel group, a beam, a beam group, a precoder, an uplink (UL) transmission entity, a transmission and reception point (transmission/reception point (TRP)), a base station, spatial relation information (SRI), a spatial relation, an SRS resource indicator (SRI), a control resource set (CORESET), a physical downlink shared channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a physical uplink control channel (PUCCH) group, or a PUCCH resource group), a resource (for example, a reference signal resource and an SRS resource), a resource set (for example, a reference signal resource set), a CORESET pool, a downlink transmission configuration indication state (TCI state) (DL TCI state), an uplink TCI state (UL TCI state), a unified TCI state, a common TCI state, a quasi-co-location (QCL), QCL assumption, and the like may be interchangeable with each other.

In the present disclosure, a base station, gNB, and a network (NW) may be interchangeable with each other.

In the present disclosure, a cell group, a serving cell group, a master cell group (MCG), and a secondary cell group (SCG) may be interchangeable with each other. L1/L2, L1/L2 signaling, and DCI/MAC CE may be interchangeable with each other. A serving cell may be replaced with a cell that transmits a PDSCH. A candidate cell may mean a candidate cell that becomes a serving cell by L1/L2 inter-cell mobility. L1L2-triggered mobility (LTM), L1/L2 inter-cell mobility, and mobility may be interchangeable with each other.

In the present disclosure, a cell, a PCI, a serving cell, a source serving cell, a source cell, a CC, a BWP, a BWP in a CC, and a band may be interchangeable with each other. In the present disclosure, a cell, a PCI, a cell with an additional PCI, an additional cell, another cell, a non-serving cell, a cell with a different PCI, a candidate cell, a candidate serving cell, a cell with a PCI different from a PCI of the current serving cell, another serving cell, and a target cell may be interchangeable with each other. The target cell may be a cell selected from a plurality of candidate cells. In the present disclosure, switching, changing, and updating may be interchangeable with each other. The serving cell may be interchangeable with a serving cell before switching or a serving cell after switching.

In the present disclosure, event-based beam reporting, event-triggered beam reporting, event-driven beam reporting, UE-triggered beam reporting, and UE-initiated beam reporting may be interchangeable with each other.

In the present disclosure, event-based beam reporting may simply be referred to as beam reporting/CSI reporting/L1-RSRP/SINR beam reporting.

In the present disclosure, a table, mapping, and association may be interchangeable with each other.

In the present disclosure, (new) MAC CE, (new) UCI, CG-UCI, UTO-UCI, a cell switching command, a beam switching command, beam reporting MAC CE, cell switching MAC CE, beam switching MAC CE may be interchangeable with each other.

In the present disclosure, event-based beam reporting may be reported via PUSCH (for example, configured grant PUSCH or grant-based PUSCH)/PUCCH. In addition, the report content in the present disclosure may be transmitted using at least one of MAC CE/UCI/PUCCH/PUSCH.

### (Radio Communication Method)

A specific UL channel configuration may be configured/activated/indicated for event-based beam reporting.

The configuration/activation/indication may be performed using higher layer signaling (for example, RRC signaling/MAC CE)/DCI.

When event-based beam reporting is triggered, the UE may transmit beam reporting information/CSI report using the specific UL channel.

Each embodiment of the present disclosure may be applied to at least one of event-based beam reporting regarding MIMO (Multi Input Multi Output) operation and event-based beam reporting regarding mobility/LTM operation.

### <First Embodiment>

A first embodiment relates to an operation regarding event-based beam reporting.

A specific UL channel that transmits beam reporting information/CSI reporting may be, for example, a (dedicated) configured grant (CG) PUSCH.

Event-based beam reporting may be triggered based on a specific triggering event/condition. The event may be, for example, at least one of the events.

The UE may transmit the beam reporting information using a specific MAC CE. An example of the specific MAC CE will be described below. The specific MAC CE may be, for example, a newly (Rel. 19 or later) defined MAC CE.

According to the first embodiment, a delay for beam reporting can be reduced by using a CG PUSCH, as compared to a PUSCH (dynamic grant PUSCH (DG PUSCH)) requested by an SR/PRACH for a MAC CE having beam reporting information. In addition, resources of the CG PUSCH can be shared among a plurality of UEs, which improves the resource utilization efficiency.

Note that the configuration of the CG PUSCH in the present embodiment does not need to be a configuration of a CG PUSCH dedicated to event-based beam reporting. In other words, the UE may use any configuration of the CG PUSCH for event-based beam reporting.

When event-based beam reporting is triggered, the UE may transmit beam reporting information in the first valid CG PUSCH transmission occasion after the trigger.

In addition, the configuration of the CG PUSCH in the present embodiment may be a configuration of a CG PUSCH dedicated to event-based beam reporting. In this case, when the UE is not configured with the CG PUSCH, the UE may transmit an SR and be scheduled for PUSCH transmission for event-based beam reporting. The SR configuration/resource may be a configuration/resource dedicated to event-based beam reporting, or may not be a configuration/resource for event-based beam reporting (may be any configuration/resource).

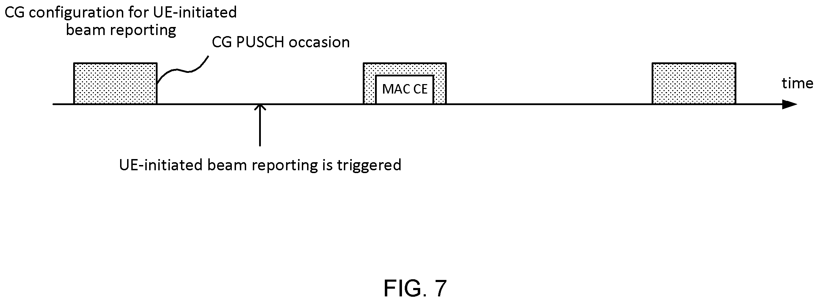

FIG. 7 is a diagram illustrating an example of the beam reporting according to the first embodiment. In the example illustrated in FIG. 7, the UE is configured in advance with a CG PUSCH for beam reporting (which may be referred to as a CG PUSCH transmission occasion, a CG PUSCH occasion, or the like). When event-based beam reporting is triggered (or the UE determines to perform event-based beam reporting based on the implementation of the UE), the UE transmits a MAC CE including beam information in the first valid CG PUSCH transmission occasion after the trigger.

A timer regarding retransmission of beam reporting (for example, cg-BeamReport-RetransmissionTimer) may be defined/configured. The UE may control the retransmission of beam reporting information based on the timer.

The timer regarding retransmission of beam reporting (for example, cg-BeamReport-RetransmissionTimer) may correspond to a duration after the transmission/retransmission regarding a configured grant regarding the HARQ process of initial transmission of a MAC CE for event-based beam reporting, for example, when the UE does not autonomously initiate retransmission in the HARQ process.

The UE may determine not to autonomously perform retransmission of a CG by a MAC CE for beam reporting while the timer regarding retransmission of beam reporting is operating/activating.

Regarding at least one of a CG PUSCH for initial transmission of a MAC CE for event-based beam reporting and retransmission of the initial transmission of the MAC CE, the timer regarding retransmission of beam reporting (for example, cg-BeamReport-RetransmissionTimer) may be started/restarted.

When the timer regarding retransmission of beam reporting (for example, cg-BeamReport-RetransmissionTimer) is started by the PUSCH transmission, the timer may be started at a specific timing (for example, at the start of the first symbol of the PUSCH transmission).

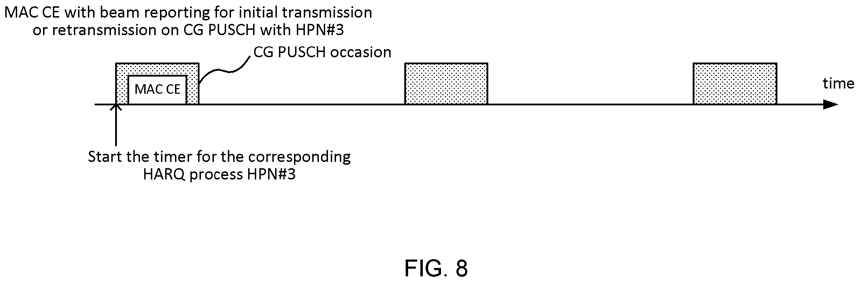

FIG. 8 is a diagram illustrating an example of starting the timer regarding retransmission of beam reporting according to the first embodiment. In the example illustrated in FIG. 8, the UE transmits a MAC CE for event-based beam reporting using the CG PUSCH.

In the example illustrated in FIG. 8 when the HARQ process of the CG PUSCH corresponds to HARQ process number (HPN) #3, the timer regarding retransmission of beam reporting corresponding to the HARQ process HPN #3 is started at a specific timing (in the example illustrated in FIG. 8, the starting symbol of the CG PUSCH transmitting a MAC CE).

The timer regarding retransmission of beam reporting (for example, cg-BeamReport-RetransmissionTimer) may be stopped in a specific case while the corresponding HARQ process is ongoing.

The specific case may be at least one of the following.
- A case where a UL grant of a PDCCH is received for a specific RNTI (for example, a cell (C-)RNTI/temporary cell (TC-)RNTI) of a MAC entity.
- A case where a UL grant is received in a random access response (RAR) (a case where a UL grant of a PDCCH is received for a specific RNTI (for example, a random access (RA-)RNTI) of a MAC entity).
- A case where a UL grant of a PDCCH is received for a specific RNTI (for example, a configured scheduling (CS-)RNTI) of a MAC entity and where a new data indicator (NDI) corresponding to the received HARQ information indicates a specific value (for example, a toggled value (for example, 1)).
- A case where a timer regarding a configured grant (for example, configuredGrantTimer) expires.

When the same HARQ process ID is indicated by at least one of a UL grant/DCI where CRC is scrambled by a specific RNTI (for example, C-/TC-RNTI), a UL grant/DCI corresponding to RAR, and a UL grant/DCI where CRC is scrambled by a specific RNTI (for example, CS-RNTI) and that has an NDI of a specific value, the UE may determine that the previous transmission for the same HARQ process ID has succeeded and stop the corresponding timer.

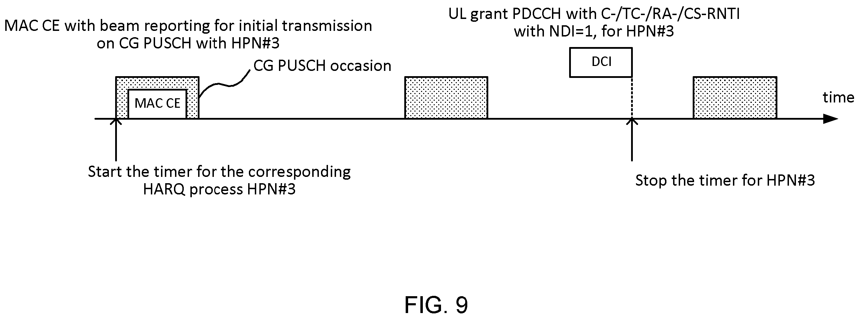

FIG. 9 is a diagram illustrating an example of stopping the timer regarding retransmission of beam reporting according to the first embodiment. In the example illustrated in FIG. 9, the UE transmits a MAC CE for event-based beam reporting using the CG PUSCH.

In the example illustrated in FIG. 9, as illustrated in FIG. 8 above, the timer regarding retransmission of beam reporting corresponding to the HARQ process HPN #3 is started.

At a certain timing, the UE receives DCI with NDI=1 (DCI in a PDCCH where CRC is scrambled by C-/TC-/RA-/CS-RNTI) for HPN #3. The UE stops the timer regarding retransmission of beam reporting at the timing.

In addition, when the timer regarding a configured grant (for example, configuredGrantTimer) for the HARQ process expires, the UE may stop the timer regarding retransmission of beam reporting (for example, cg-BeamReport-RetransmissionTimer) if the HARQ process is ongoing.

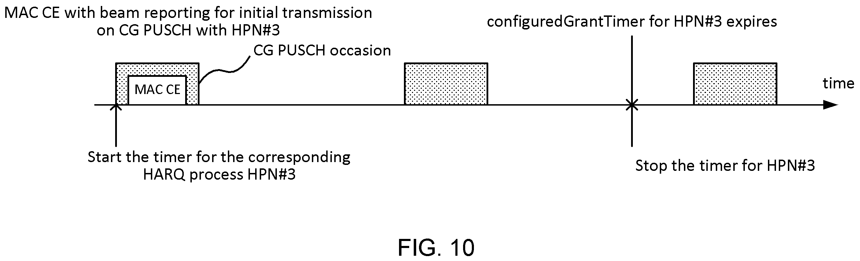

FIG. 10 is a diagram illustrating another example of stopping the timer regarding retransmission of beam reporting according to the first embodiment. In the example illustrated in FIG. 10, the UE transmits a MAC CE for event-based beam reporting using the CG PUSCH.

In the example illustrated in FIG. 10, as illustrated in FIG. 8 above, the timer regarding retransmission of beam reporting corresponding to the HARQ process HPN #3 is started.

In the example illustrated in FIG. 10, at a certain timing, the timer regarding a configured grant (configuredGrantTimer) for HPN #3 expires. The UE stops the timer regarding retransmission of beam reporting at the timing.

In a case where the timer regarding retransmission of beam reporting (for example, cg-BeamReport-RetransmissionTimer) is configured for a CG PUSCH, the corresponding HARQ entity is not running, and the CG PUSCH is for a MAC CE for beam reporting (Case A), the UE may determine that the NDI bit has been toggled. In addition, in this case, the UE may deliver the UL grant (configured UL grant) associated with the CG PUSCH and the related HARQ information to the HARQ entity.

In a case other than Case A, where the previous UL grant for the same HARQ process is for initial transmission/retransmission of the MAC CE for beam reporting and where a PDCCH addressed to a specific RNTI (for example, C-RNTI) is not received in the same HARQ process used for retransmission of the MAC CE for beam reporting, the UE may determine that the NDI bit is not toggled. In addition, in this case, the UE may deliver the UL grant (configured UL grant) associated with the CG PUSCH and the related HARQ information to the HARQ entity.

By defining as described above, the NDI bit can be appropriately interpreted in the initial transmission of the CG PUSCH transmitting the MAC CE for beam reporting before the timer regarding retransmission of beam reporting is started.

According to the first embodiment above, event-based beam reporting can be appropriately performed by using the CG PUSCH.

### <<Example of Specific MAC CE>>

Hereinafter, an example of the specific MAC CE will be described.

Note that, in the drawings illustrating an example of the MAC CE of the present disclosure, an example where the measurement result is indicated by L1-RSRP will be described. However, this example is merely an example, and the indicator of the measurement result is not limited thereto.

A new MAC CE including a logical channel ID (LCID) may be defined, and may be used for the CSI reporting triggered by the event. In the following description, "reporting" may mean, for example, a set of an SSB index, a Re-indexing index of cell, and L1-RSRP/L3-RSRP. In each drawing, the SSB index may be replaced with a CSI-RS index. In each drawing, for example, reporting regarding one serving cell and reporting regarding one or more non-serving cells may be included. RSRP may be replaced with SINR.

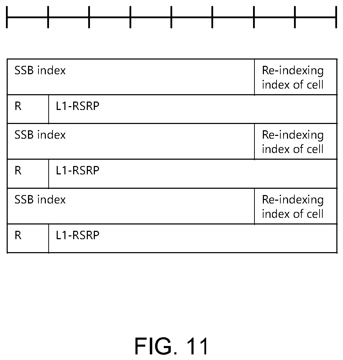

FIG. 11 is a diagram illustrating a first example of the MAC CE used for CSI reporting. In the example of FIG. 11, a new ID (Re-indexing index of cell) corresponding to each SSB index and the L1-RSRP are reported. The first report (SSB index, Re-indexing index of cell, and L1-RSRP) may relate to the serving cell, and the second and third reports may relate to non-serving cells. One of the SSB indices of FIG. 11 may be an SSB index of the best beam of the non-serving cell.

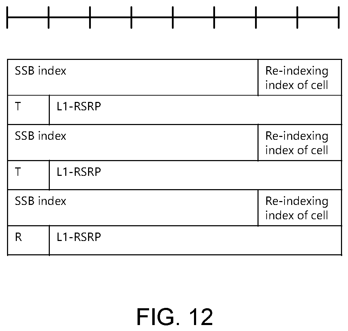

FIG. 12 is a diagram illustrating a second example of the MAC CE used for CSI reporting. "T" in FIG. 12 is a flag indicating whether or not the reporting for the next octet (8-bit) for the non-serving cell is present. The other points are the same as those in FIG. 11.

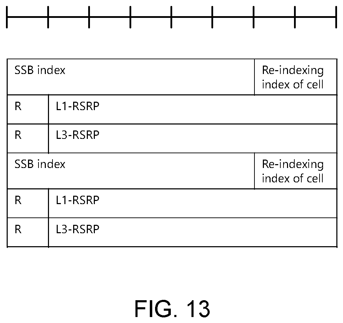

FIG. 13 is a diagram illustrating a third example of the MAC CE used for CSI reporting. In the example of FIG. 13, the report includes L1-RSRP and L3-RSRP. The number of reports is two, but may be three similarly to FIGS. 11 and 12. The other points are the same as those in FIG. 11.

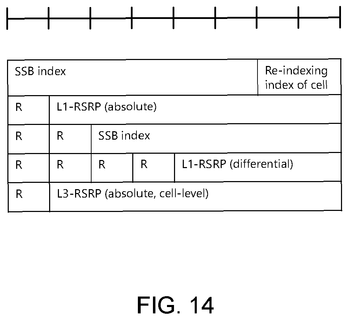

FIG. 14 is a diagram illustrating a fourth example of the MAC CE used for CSI reporting. The L1-RSRP (absolute) in the example of FIG. 14 is an absolute value (maximum value). The L1-RSRP (differential) is the difference between the L1-RSRP of the second SSB index (beam) and the first L1-RSRP (absolute). The L3-RSRP (absolute value, cell-level) is an absolute value (maximum value) of the L3-RSRP at the cell level (per cell).

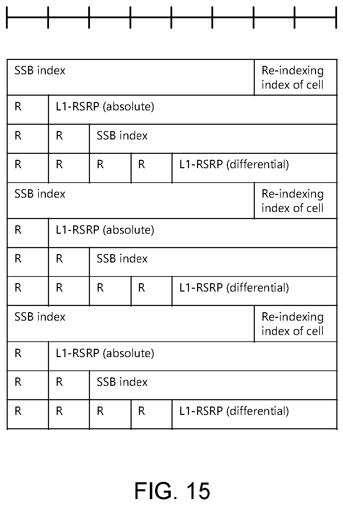

FIG. 15 is a diagram illustrating a fifth example of the MAC CE used for CSI reporting. In the example of FIG. 15, the content excluding L3-RSRP from the example of FIG. 14 is arranged for each of three cells.

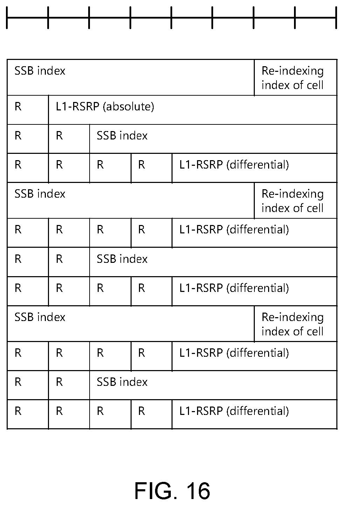

FIG. 16 is a diagram illustrating a sixth example of the MAC CE used for CSI reporting. In FIG. 16, the report for the first cell (for example, the serving cell) is the same as that in FIG. 15, but the reports for the second and third cells (for example, the non-serving cells) include L1-RSRP (differential) instead of L1-RSRP (absolute). For example, L1-RSRP (differential) is a measurement result for each beam, and may be the difference from the L1-RSRP (absolute) of the first cell.

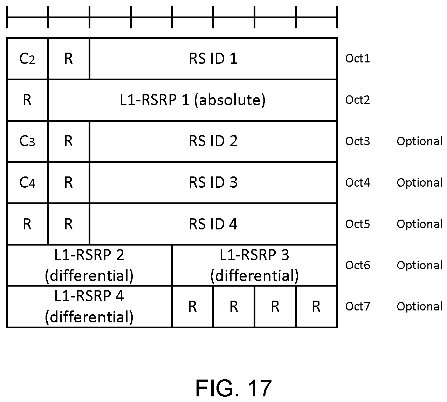

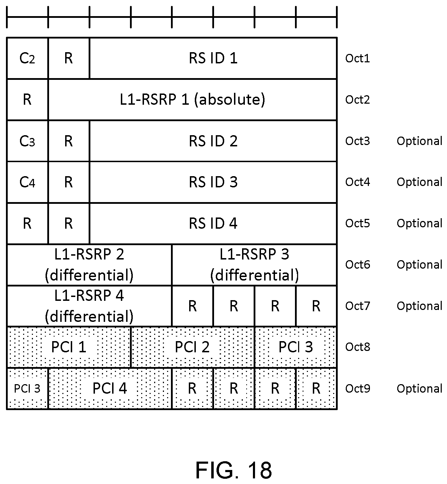

FIG. 17 is a diagram illustrating a seventh example of the MAC CE used for CSI reporting. FIG. 18 is a diagram illustrating an eighth example of the MAC CE used for CSI reporting.

The MAC CE illustrated in FIG. 17 may include a field indicating the presence of measurement results and RSs for the second to fourth beams ("Cᵢ" field (i = 2, 3, 4)), a field indicating RS IDs corresponding to up to the fourth highest beams ("RS ID i" field (i = 2, 3, 4)), a field indicating the measurement results ("L1-RSRP i" field (i = 2, 3, 4)), and a reserved field ("R" field).

The field indicating the RS IDs may be configured with 6 bits in the case of only SSBRI, or may be configured with 7 bits in the case of SSBRI/CRI.

In the MAC CE, the field corresponding to the measurement result of the best (first highest) beam may be defined by a first number of bits (for example, 7 bits). In this case, the field may indicate the absolute value of the measurement result.

In the MAC CE, the field corresponding to the measurement result of beams other than the best beam (for example, the measurement results of the second to fourth beams) may be defined by a second number of bits (for example, 4 bits). In this case, the field may indicate a relative value/differential value with respect to the measurement result of the best beam.

In the MAC CE, the field corresponding to the measurement result of beams other than the best beam (for example, the measurement results of the second to fourth beams) may be defined by the first number of bits (for example, 7 bits). In this case, the field may indicate the absolute value of the measurement result.

In the MAC CE, the "Cᵢ" field may be represented by 1 bit. When the "Cᵢ" field indicates a first value (for example, 0), this may indicate that the reporting of the corresponding beam is not performed. When the "Cᵢ" field indicates a second value (for example, 1), this may indicate that the reporting of the corresponding beam is performed.

For example, when each of the "C₂" field, the "C₃" field, and the "C₄" field indicates 1, the reporting of the measurement result and RS ID of the second beam, the measurement result and RS ID of the third beam, and the measurement result and RS ID of the fourth beam may be performed in the MAC CE. That is, only when the "C₂" field, the "C₃" field, and the "C₄" field indicate 1, the fields (RSRP/PCI) corresponding to the second to fourth beams may be present.

In FIG. 17, the fields in octets 3 to 7 may be optional.

In the MAC CE illustrated in FIG. 18, 16 bits corresponding to octets 8 to 9 may be added to the MAC CE of FIG. 17.

The additional fields may include a field indicating the PCI of the serving cell/additional cell/candidate cell ("PCI i" field (for example, i = 1, 2, 3, 4)) and a reserved field ("R" field). The field indicating the PCI may be configured with, for example, 3 bits.

According to the additional fields (by also utilizing the reserved field), in addition to the PCI of one serving cell, PCIs of up to seven additional cells can be indicated. The size of each field can be appropriately changed. The size of each field may be configured by RRC, may be predefined in the specifications, or may be determined based on the UE capability.

For example, the size of the field indicating the RS ID (RS ID field) may be increased or decreased depending on whether or not the field indicating the PCI (PCI field) is included. For example, when the field indicating the PCI (PCI field) is not included (for example, Type 2-1), the RS ID field may be increased/extended (for example, by 2 bits). That is, the size of the PCI field may be variable depending on the type of the beam reporting.

### <Second Embodiment>

A second embodiment relates to event-based beam reporting.

A specific UL channel transmitting the beam reporting information/CSI reporting may be, for example, a PUSCH.

The PUSCH may transmit, for example, specific semi-persistent (SP-)/aperiodic (A-) CSI reporting having a CSI reporting configuration ID (for example, CSI-ReportConfigId).

When event-based beam reporting is triggered, the UE may transmit beam reporting information in the PUSCH for SP-/A-CSI reporting.

When event-based beam reporting is not triggered, the UE does not need to transmit beam reporting information in the PUSCH for SP-/A-CSI reporting.

Event-based beam reporting may be triggered based on a specific triggering event/condition. The event may be, for example, at least one of the events.

The UE may transmit the beam reporting information using a specific MAC CE. An example of the specific MAC CE may be at least one of the MAC CEs described above. The specific MAC CE may be, for example, a newly (Rel. 19 or later) defined MAC CE.

Regarding retransmission of the SP-/A-CSI reporting (beam reporting information) in the PUSCH, the UE may perform the retransmission based on scheduling by a UL grant for a PUSCH having the same HARQ process ID.

According to the second embodiment above, event-based beam reporting can be appropriately performed by using the PUSCH transmitting SP-/A-CSI.

### <Third Embodiment>

A third embodiment relates to a UCI transmitting beam reporting information.

At least one of a new UCI, an existing CG-UCI (with extension), and an unused transmission occasion indicated by a UCI (with extension) (unused transmission occasion(s) indicated by a UCI(UTO-UCI)) in the CG-PUSCH may be configured/defined to indicate beam reporting information for event-based beam reporting.

At least one of the new UCI, the existing CG-UCI, and the UTO-UCI may transmit beam reporting.

In the present disclosure, the new UCI may mean a new type of UCI. In the present disclosure, the new UCI may be simply referred to as "UCI".

The configuration regarding the reporting of the new UCI may follow Option 3-1/3-2 below.

### <<Option 3-1>>

The reporting of the new UCI may be configured for each CG configuration.

For example, only one CG configuration may be configured for the reporting of the new UCI.

In addition, for example, one or a plurality of CG configurations may be configured for the new UCI (reporting thereof).

### <<Option 3-2>>

The reporting of the new UCI may be configured in common for a plurality (for example, all) of CG configurations.

In each CG PUSCH transmission occasion for the CG configuration in which the new UCI is configured, at least one of the following Options 3-A to 3-D may be applied regarding whether or not the new UCI (which may be referred to as a new UCI container) capable of transmitting beam reporting is present.

### <<Option 3-A>>

Each CG PUSCH transmission occasion to be transmitted may include the new UCI container.

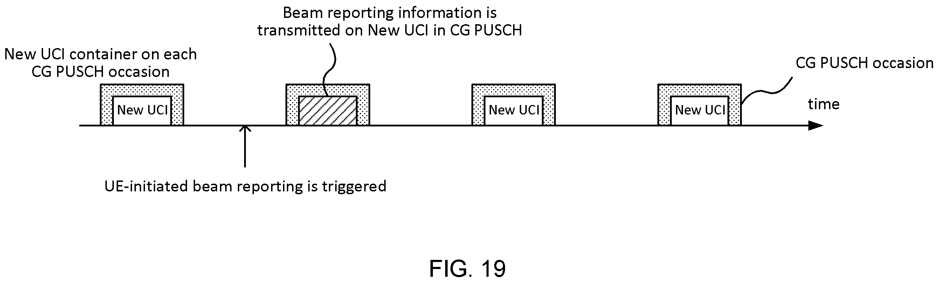

FIG. 19 is a diagram illustrating an example of the CG PUSCH according to Option 3-A. In the example illustrated in FIG. 19, four CG PUSCH transmission occasions are illustrated, and each of the four CG PUSCH transmission occasions includes the new UCI container.

In the example illustrated in FIG. 19, event beam reporting is triggered at a certain timing. The UE transmits beam reporting information using the new UCI in the first PUSCH transmission occasion after the trigger.

### <<Option 3-B>>

The CG PUSCH transmission occasion having the new UCI container may be predefined, may be configured/indicated based on the CG configuration, and may be determined based on a specific condition.

For example, the CG PUSCH transmission occasion may be configured based on at least one of information regarding the periodicity in the CG configuration and information regarding the starting offset.

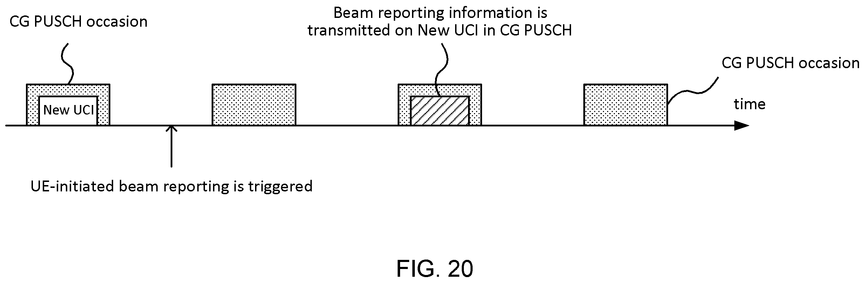

FIG. 20 is a diagram illustrating an example of the CG PUSCH according to Option 3-B. In the example illustrated in FIG. 20, four CG PUSCH transmission occasions are illustrated, in which it is predefined/configured that two of the four transmission occasions include the new UCI container.

In the example illustrated in FIG. 20, event beam reporting is triggered at a certain timing. The UE transmits beam reporting information using the first PUSCH transmission occasion including the new UCI container after the trigger.

### <<Option 3-C>>

When a specific condition is satisfied, the CG PUSCH transmission occasion may include the new UCI container.

The specific condition may be, for example, that the CG PUSCH transmission occasion is the first PUSCH transmission in a CG period. In addition, the specific condition may be, for example, that the CG PUSCH transmission occasion is the first PUSCH transmission after an SR for event-based beam reporting is transmitted.

Note that, the transmission of the SR for event-based beam reporting will be described in detail in a fourth embodiment below.

### <<Option 3-D>>

Whether or not the CG PUSCH transmission occasion includes the new UCI container may be indicated using a field/bit of the CG-UCI/UTO-UCI.

In this case, for the CG PUSCH, it may be supported to include both the CG-UCI/UTO-UCI and the new UCI.

For example, the CG-UCI/UTO-UCI may indicate whether or not the new UCI container is present in the current CG PUSCH transmission occasion (of the CG-UCI/UTO-UCI).

In addition, for example, the CG-UCI/UTO-UCI may indicate whether or not the new UCI container is present in the next CG PUSCH transmission occasion.

In addition, for example, the CG-UCI/UTO-UCI may indicate whether or not the new UCI container is present in one or more CG PUSCH transmission occasions. The indication may be indicated, for example, in a preconfigured/predefined pattern or in a bitmap format.

Note that, in Options 3-A to 3-D above, when it is indicated that the new UCI container is present, the UE may determine that the new UCI container is present in the corresponding CG PUSCH transmission occasion. At this time, the new UCI container does not necessarily include beam reporting information.

In addition, in Options 3-A to 3-D above, when it is indicated that the new UCI container is present, the UE may determine that the new UCI container is present in the corresponding CG PUSCH transmission occasion. At this time, the new UCI container may always include beam reporting information.

For the encoding/multiplexing of the new UCI in the CG-PUSCH, the same encoding/multiplexing method of the CG-UCI/UTO-UCI may be used.

The new UCI may have a specific priority (physical priority). For example, the new UCI may have the same priority as that of the CG PUSCH.

For example, when a HARQ-ACK having the same priority as the CG PUSCH is mapped/multiplexed to/with the CG PUSCH, the new UCI may be encoded together with the HARQ-ACK.

In addition, for example, HARQ-ACK bits may be jointly encoded following the bits of the UTO-UCI.

The content of the beam reporting information included in the new UCI may be specific information. For example, the specific information may be information corresponding to the fields included in the MAC CE.

For example, the UE may transmit a part of information (additional field) included in the MAC CE using a specific CSI (for example, CSI part 2). The UE may transmit information for determining a size X of CSI part 2 (some indication fields of CSI part 2) to the NW as another UCI in CSI part 1.

In other words, CSI part 1 may include information regarding the UCI size of CSI part 2. CSI part 1 and CSI part 2 may be reported via one PUCCH resource.

CSI part 1 and CSI part 2 may be transmitted via different PUCCH resources/UCIs.

When CG-UCI/UTO-UCI is confirmed for event-based beam reporting, the content of beam reporting information may be added to the content of an existing CG-UCI/UTO-UCI.

According to the third embodiment above, beam reporting information can be appropriately transmitted using various UCIs.

### <Fourth Embodiment>

A fourth embodiment relates to an SR regarding beam reporting information.

A (dedicated) SR(PUCCH-SR) may be configured for event-based beam reporting.

The configuration may be performed based on RRC signaling using a new RRC parameter.

When event-based beam reporting is triggered by a specific event/condition, a related SR may be transmitted from the UE to the NW.

After a specific period (for example, a period X) has elapsed from the transmission of the SR, at least one of lower Options 4-1 to 4-8 may be applied.

Note that the X may be predefined, may be notified/configured/indicated to the UE using higher layer signaling (RRC/MAC CE)/DCI, may be determined based on the UE capability information, or may be determined by a combination thereof.

### <<Option 4-1>>

The UE does not need to perform an additional operation.

In order to report beam reporting information for a specific CSI reporting configuration (for example, CSI-ReportConfig), the UE may receive the configuration/indication of semi-persistent/aperiodic beam reporting by the NW.

In order to report beam reporting information for a specific CSI reporting configuration (for example, CSI-ReportConfig), the UE may wait to receive the configuration/indication of semi-persistent/aperiodic beam reporting by the NW.

The specific CSI reporting configuration (for example, CSI-ReportConfig) may be extended from an existing CSI reporting configuration to report beam information regarding event-based beam reporting.

### <<Option 4-2>>

The UE may generate a MAC CE including beam reporting information.

In addition, the UE may receive/wait for a DCI having a UL grant scheduling a PUSCH, and may transmit the MAC CE.

In the case of the present option, the UE may transmit an existing SR and does not need to transmit an SR for event-based beam reporting.

### <<Option 4-3>>

The UE may generate a MAC CE including beam reporting information.

The UE may transmit the MAC CE in a specific (for example, the first) CG PUSCH transmission occasion after the transmission of the SR for event-based beam reporting.

A transmission period of the CG PUSCH may be based on any CG PUSCH configuration, or may be based on the CG PUSCH configuration described in the first embodiment.

### <<Option 4-4>>

The UE may generate a new UCI including beam reporting information (and at least one of CG-UCI/UTO-UCI).

The UE may transmit a new UCI container/new UCI in a specific (for example, the first) CG PUSCH transmission occasion after the transmission of the SR for event-based beam reporting.

A transmission period of the CG PUSCH may be based on any CG PUSCH configuration, or may be based on the CG PUSCH configuration described in the first embodiment.

In the present option, the presence of the new UCI container may be configured/indicated in accordance with at least one of the methods described in the third embodiment. In this case, the actual transmission of the new UCI may be indicated by the SR.

### <<Option 4-5>>

The SR for event-based beam reporting may be considered as an indication of the new UCI with beam reporting information in the next CG PUSCH transmission occasion (which may be based on any CG PUSCH configuration or based on the CG PUSCH configuration described in the first embodiment).

That is, the UE may generate a new UCI/CG-UCI/UTO-UCI with beam reporting information.

Next, the UE may transmit a new UCI container/new UCI in a specific (for example, the first) CG PUSCH transmission occasion after the transmission of the SR for event-based beam reporting.

In the present option, the new UCI container does not need to be present in the CG PUSCH before the transmission of the SR. The UE may assume/determine that the new UCI container is not present in the CG PUSCH before the transmission of the SR.

At least one of the presence of the new UCI container/new UCI and the actual transmission of the new UCI may be indicated by the SR.

In addition, until the transmission of the new UCI succeeds, the transmission of the new UCI may be defined as a one-shot/multi-shot new UCI transmission. In other words, the UE may transmit the new UCI as a one-shot (single transmission), or may transmit the new UCI as a multi-shot (multiple transmissions). The number of times of the multi-shot may be predefined in the specifications, may be notified to the UE by RRC/MAC CE/DCI, or may be determined based on the UE capability information.

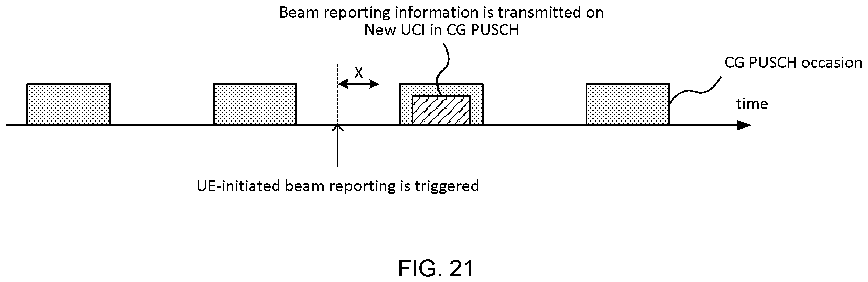

FIG. 21 is a diagram illustrating an example of transmission of beam reporting information according to Option 4-5. In the example illustrated in FIG. 21, four CG PUSCH transmission occasions are illustrated. In the example illustrated in FIG. 21, by default, the new UCI container is not present in each of the CG PUSCH transmission occasions.

In the example illustrated in FIG. 21, event beam reporting is triggered at a certain timing. The UE transmits beam reporting information using the new UCI in the first PUSCH transmission occasion after the specific period (X) has elapsed from the trigger. Note that, in the example illustrated in FIG. 21, one-shot transmission of the new UCI/beam reporting information is indicated.

### <<Option 4-6>>

The SR for event-based beam reporting may be considered as an indication of activation of a predefined/configured CG PUSCH configuration.

In addition, the SR may be configured in association with a CG PUSCH configuration.

The UE may transmit a MAC CE/new UCI in a specific (for example, the first) CG PUSCH transmission occasion of a newly activated CG PUSCH configuration.

A condition regarding deactivation of the CG PUSCH configuration may be defined.

For example, a timer for the CG PUSCH configuration may be predefined/configured. When the timer expires, the UE may deactivate the CG PUSCH configuration.

In addition, for example, the UE may deactivate the CG PUSCH configuration at a specific timing after the MAC CE/new UCI is (normally) transmitted in a specific (for example, the first) CG PUSCH transmission occasion.

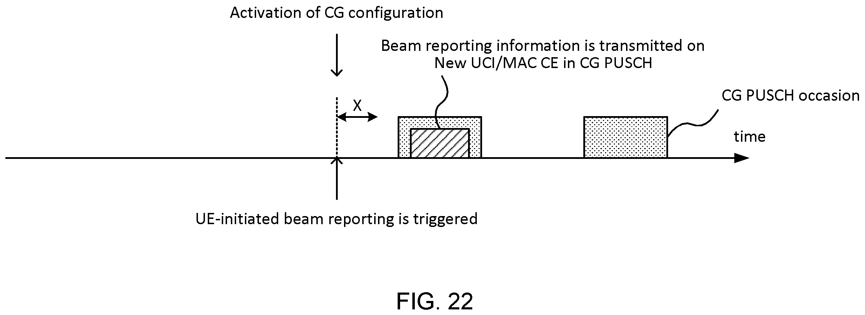

FIG. 22 is a diagram illustrating an example of transmission of beam reporting information according to Option 4-6. In the example illustrated in FIG. 22, event beam reporting is triggered at a certain timing. At this time, the UE determines that the CG configuration has been activated, and transmits beam reporting information using the MAC CE/new UCI in the first CG PUSCH transmission occasion after the specific period (X) has elapsed from the trigger. Note that, in the example illustrated in FIG. 22, one-shot transmission of the new UCI/MAC CE/beam reporting information is indicated.

### <<Option 4-7>>

The SR for event-based beam reporting may be considered as an indication of the event-based beam reporting in the subsequent first PUCCH resource (normal PUCCH resource).

The UE may transmit beam reporting information using the UCI in a specific (for example, the first) PUCCH resource (normal PUCCH resource) after the SR transmission.

In this case, in the PUCCH resource, the UE may transmit beam reporting information, irrespective of whether or not other UCI content is present.

In addition, the UE may transmit beam reporting information together with the UCI content in a specific (for example, the first) PUCCH resource (the PUCCH resource with other UCI content) after the transmission of the SR.

In this case, when the UCI includes periodic/semipersistent beam reporting information, the beam reporting information related to event-based beam reporting may be replaced with the periodic/semi-persistent beam reporting information.

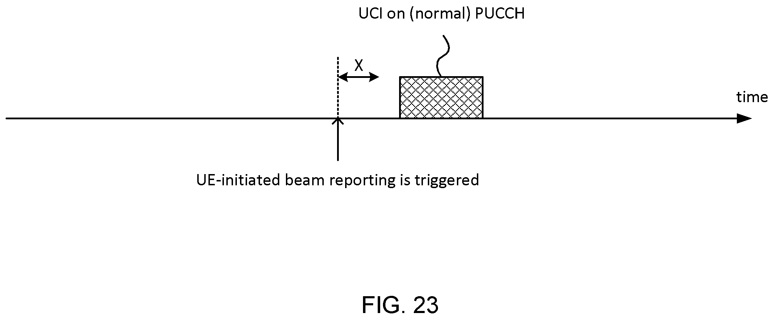

FIG. 23 is a diagram illustrating an example of transmission of beam reporting information according to Option 4-7. In the example illustrated in FIG. 23, event beam reporting is triggered at a certain timing. At this time, the UE determines that the CG configuration has been activated, and transmits beam reporting information using the new UCI in the first (normal) PUCCH resource after the specific period (X) has elapsed from the trigger. In the example illustrated in FIG. 23, one-shot transmission of the new UCI/beam reporting information is indicated.

### <<Option 4-8>>

The SR for event-based beam reporting may be considered as an indication of activation of preconfigured SP-/A-CSI reporting in the PUSCH.

In addition, the SR may be associated with SP-/A-CSI reporting in the PUSCH.

The UE may transmit beam reporting information regarding event-based beam reporting based on the SP-/A-CSI reporting in the PUSCH.

A condition regarding deactivation of the SP-/A-CSI reporting may be defined/configured.

For example, a timer for the SP-/A-CSI reporting may be predefined/configured. When the timer expires, the UE may deactivate the SP-/A-CSI reporting in the PUSCH.

In addition, for example, the UE may deactivate the SP-/A-CSI reporting at a specific timing after the beam reporting information regarding event-based beam reporting is (normally) transmitted.

Note that the SP-/A-CSI reporting may be transmitted using the PUSCH/PUCCH.

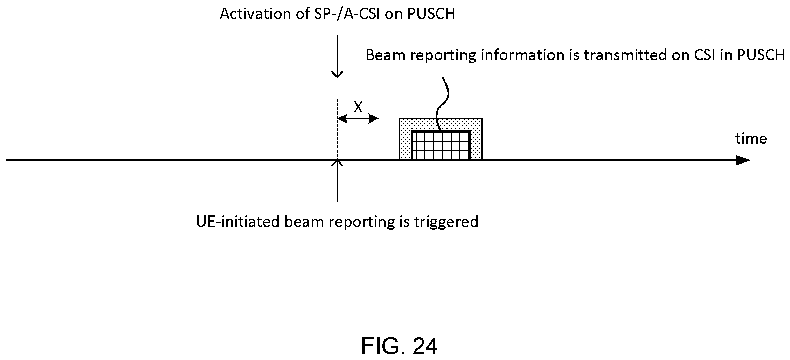

FIG. 24 is a diagram illustrating an example of transmission of beam reporting information according to Option 4-8. In the example illustrated in FIG. 24, event beam reporting is triggered at a certain timing. At this time, the UE determines that the SP-/A-CSI reporting has been activated, and transmits beam reporting information using the SP-/A-CSI in the first PUSCH transmission occasion after the specific period (X) has elapsed from the trigger. In the example illustrated in FIG. 24, one-shot transmission of the CSI/beam reporting information is indicated.

### <<Variation of Fourth Embodiment>

A plurality of (dedicated) SRs (PUCCH-SR resources) may be configured for event-based beam reporting via RRC signaling.

The configuration of each SR may be associated with a specific beam (for example, a CSI-RS/SSB) from a specific cell.

The specific cell may be a serving cell for intracell, and may be a cell with an additional physical cell ID (PCI) for inter-cell.

When event-based beam reporting is triggered by a specific event/condition, the SR resource used for transmission may be a specific SR resource.

For example, the UE may select/determine, as the specific SR resource, an SR resource corresponding to a beam (recommended beam) with good channel quality(for example, RSRP/RSRQ/SINR).

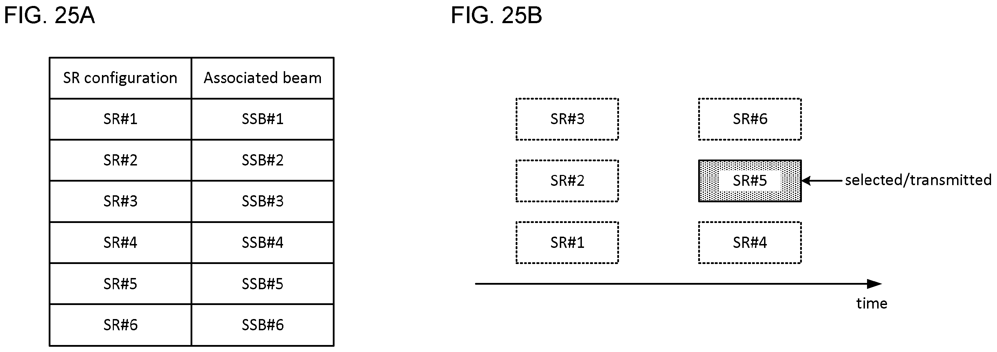

FIGS. 25A and 25B are diagrams illustrating SR selection and association between SRs and SSBs according to a variation of the fourth embodiment. FIG. 25A illustrates correspondence between the SRs (SR configurations) and the associated beams (here, which may be SSBs (for example, CSI-RSs, SRSs, TCI states, physical cell IDs (PCIs), or the like)).

In the example illustrated in FIG. 25B, SR#1 to SR#6 are illustrated as the plurality of SR configurations. The UE selects SR#5 based on the recommended beam (here, SSB#5).

According to the fourth embodiment above, operations related to the event-based beam reporting using the SRs and the SR configurations can be appropriately defined.

### <Modifications of First to Fourth Embodiments>

The different embodiments/options may be applied to different purposes/scenarios, respectively.

For example, the different purposes/scenarios may be event-based beam reporting for MIMO and event-based beam reporting for mobility/LTM.

For example, in the case of MIMO (for example, when beam management is targeted rather than cell switching), UCI-based beam reporting (for example, the second/third/fourth embodiment) may be applied. Since beam indication can be performed within a relatively short time (for example, several milliseconds), it is preferable to use the UCI to prevent beam reporting delay.

For example, in the case of mobility/LTM (for example, when cell switching is targeted), MAC CE-based beam reporting (for example, the first embodiment) may be applied. A delay of several tens of milliseconds is required for cell switching, and it is highly likely that beam reporting delay does not become a problem. Therefore, it is preferable to use a MAC CE.

### <Fifth Embodiment>

A fifth embodiment relates to a response (for example, ACK/NACK) related to event-based beam reporting.

The following embodiments may be applied, for example, assuming at least one of the following Options 5-1 to 5-8.
- Option 5-1: in a PUSCH (DG PUSCH) scheduled by a dynamic grant (DCI), a MAC CE with beam reporting information for event-based beam reporting is transmitted.
- Option 5-2: in a CG PUSCH, a MAC CE with beam reporting information for event-based beam reporting is transmitted.
- Option 5-3: beam reporting information for event-based beam reporting is transmitted via SP-CSI in PUSCH.
- Option 5-4: beam reporting information for event-based beam reporting is transmitted via A-CSI in a PUSCH.
- Option 5-5: beam reporting information for event-based beam reporting is transmitted via a new UCI in CG-PUSCH/(extended) CG-UCI/(extended) UTO-UCI.
- Option 5-6: beam reporting information is transmitted via SR transmission (for example, beam reporting information implicitly related to the best beam is transmitted via the SR).
- Option 5-7: SR transmission is performed, and subsequently Option 5-1/5-2/5-3/5-4/5-5/5-6 is performed.
- Option 5-8: beam reporting information for event-based beam reporting is transmitted using normal (existing) UCI/PUCCH.

Regarding the DG/CG PUSCH in Option 5-1/5-2/5-3/5-4/5-5/5-7, the UE may determine that reception of a UL grant (and an NDI field of DCI) of a PDCCH where CRC is scrambled by a specific RNTI (for example, C-/TC-/CS-RNTI) with the same HARQ process ID (HARQ process number (HPN)) as that of the PUSCH transmission is an ACK/NACK regarding event-based beam reporting.

For example, the UE may determine that a UL grant for the same HPN (and a predefined first NDI value (for example, 0) or a toggled NDI value) is an ACK regarding event-based beam reporting.

For example, the UE may determine that a UL grant for the same HPN (and a predefined second NDI value (for example, 1) or a non-toggled NDI value) is a NACK regarding event-based beam reporting.

In this case, CRC related to the UL grant may be addressed/scrambled by a specific RNTI (for example, CS-RNTI).

In order to control the valid ACK/NACK feedback period, a specific timer may be defined/configured.

For example, when a MAC CE/UCI for event-based beam reporting is transmitted, the timer may be started.

For example, when the timer expires but the UE has not received a UL grant, the UE may determine that event-based beam reporting has failed (that a NACK has been received).

According to the fifth embodiment above, responses related to event-based beam reporting can be appropriately defined.

### <Sixth Embodiment>

A sixth embodiment is a partial modification of the first embodiment.

For event-based beam reporting after a specific timer, autonomous CG PUSCH retransmission by the UE for a specific HPN may be supported.

The specific timer may be, for example, a timer regarding retransmission of beam reporting. Regarding one HARQ process, a timer regarding retransmission of beam reporting (for example, cg-BeamReport-RetransmissionTimer) may be defined/configured. The UE may control the retransmission of beam reporting information based on the timer.

The timer regarding retransmission of beam reporting (for example, cg-BeamReport-RetransmissionTimer) may correspond to a duration after the transmission/retransmission regarding a configured grant regarding the HARQ process of initial transmission of a MAC CE/new UCI for event-based beam reporting, for example, when the UE does not autonomously initiate retransmission in the HARQ process.

The UE may determine not to autonomously perform retransmission of a CG by a MAC CE/new UCI for beam reporting while the timer regarding retransmission of beam reporting is operating/activating.

Regarding at least one of a CG PUSCH for initial transmission of a MAC CE for event-based beam reporting and retransmission of the initial transmission of the MAC CE, the timer regarding retransmission of beam reporting (for example, cg-BeamReport-RetransmissionTimer) may be started/restarted.

The present embodiment may be applied in combination with the fifth embodiment.

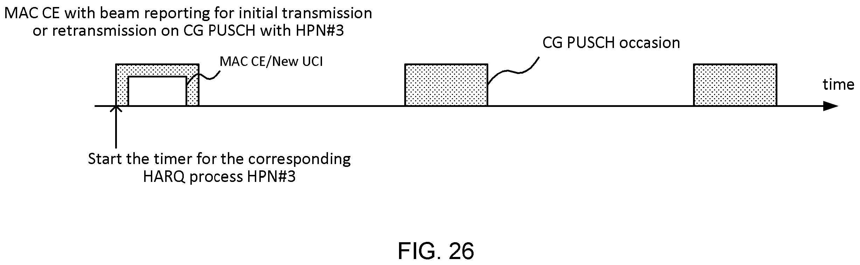

FIG. 26 is a diagram illustrating an example of starting the timer regarding retransmission of beam reporting according to the sixth embodiment. In the example illustrated in FIG. 26, the UE transmits a MAC CE/new UCI for event-based beam reporting using the CG PUSCH.

In the example illustrated in FIG. 26, when the HARQ process of the CG PUSCH corresponds to HARQ process number (HPN) #3, the timer regarding retransmission of beam reporting corresponding to the HARQ process HPN #3 is started at a specific timing (in the example illustrated in FIG. 26, the starting symbol of the CG PUSCH transmitting a MAC CE/new UCI).

According to the sixth embodiment above, even when the MAC CE/new UCI is used for event-based beam reporting, autonomous beam reporting retransmission can be appropriately performed.

### <Seventh Embodiment>

A seventh embodiment relates to ACK/NACK related to event-based beam reporting.

The UE may receive ACK/NACK for event-based beam reporting (for example, at least one of (UCI-based) event-based beam reporting transmitted using UCI and (MAC CE-based) event-based beam reporting transmitted using a MAC CE) using a specific method.

For example, the UE may receive ACK/NACK for event-based beam reporting (for example, UCI-based/MAC CE-based event-based beam reporting) using a specific DCI.

The specific DCI may be, for example, a DCI of a new DCI format (defined in Rel. 19 or later) or a DCI of an existing DCI format where CRC is scrambled by a new RNTI (defined in Rel. 19 or later).

The present embodiment may be applied to, for example, at least one of Options 5-3 to 5-8 above.

A timer regarding ACK/NACK of event-based beam reporting may be defined/configured.

For example, when a UCI for event-based beam reporting is transmitted, the timer may be started.

For example, when the UE receives a DCI of a DCI format where CRC is scrambled by a new RNTI before the timer expires, the UE may determine that the DCI is an ACK for event-based beam reporting. Otherwise, the UE may determine that event-based beam reporting has failed (that a NACK has been received).

When the UE determines that event-based beam reporting has failed (that a NACK has been received), the UE may retransmit event-based beam reporting.

According to the seventh embodiment above, UE operations for ACK/NACK related to event-based beam reporting can be appropriately defined.

### <Eighth Embodiment>

An eighth embodiment relates to ACK/NACK related to event-based beam reporting.

The UE may receive ACK/NACK for event-based beam reporting (for example, UCI-based/MAC CE-based event-based beam reporting) using a specific method.

At least one of a new bit field and an existing bit field in an existing DCI format (for example, DCI format 0_0/0_1/1_0/1_1) may be used/reused for ACK/NACK for UCI-based event-based beam reporting.

The existing DCI format may be, for example, a DCI format where CRC is scrambled by an existing RNTI (for example, C-/TC-/CS-/SP-CSI-/MCS-C-RNTI).

For example, a specific field included in a DCI format (DCI format 0_1) scheduling PUSCH where CRC is scrambled by a specific RNTI (for example, CS-RNTI) may be used for ACK/NACK for event-based beam reporting.

The specific field may be a downlink feedback information (DFI) flag field.

In the existing specifications, the DFI flag includes 1 bit only in an unlicensed band/shared spectrum. Therefore, in Rel. 19 or later, when event-based beam reporting is configured, the 1-bit field is defined and can be reused for ACK/NACK for event-based beam reporting.

The UE may not be expected to assume that both the CG DFI for unlicensed band/shared spectrum defined in Rel. 16 and the CG DFI for event-based beam reporting are simultaneously configured.

In addition, when both the CG DFI for unlicensed band/shared spectrum defined in Rel. 16 and the CG DFI for event-based beam reporting are simultaneously configured, the UE may switch the operation based on a HARQ process ID after receiving a DFI indication.

For example, the UE may perform operations regarding the CG DFI for the unlicensed band/shared spectrum defined in Rel. 16 for a HARQ process ID not related to event-based beam reporting (defined in Rel. 19 or later).

In this case, when the UE receives an ACK, the UE may terminate repeated transmission of a transport block related to the HARQ process ID. Otherwise, the UE may continue repeated transmission of a transport block related to the HARQ process ID.

In addition, for example, the UE may perform operations regarding the CG DFI for event-based beam reporting for a HARQ process ID related to event-based beam reporting (defined in Rel. 19 or later).

In this case, when the UE receives an ACK, the UE may determine to switch a beam/TCI state applied to specific DL reception/UL transmission. Otherwise, the UE may determine not to switch a beam/TCI state applied to specific DL reception/UL transmission.

Note that, when the UE receives only a NACK or when the UE receives an ACK and a NACK, the use of preconfigured UL resources may be continued to perform beam reporting.

In addition, when both the CG DFI for unlicensed band/shared spectrum defined in Rel. 16 and the CG DFI for event-based beam reporting are simultaneously configured, 1 bit may be newly added to DCI for the DFI used for event-based beam reporting.

In addition, for example, a new field included in a DCI format (for example, DCI format 0_1/1_1) scheduling PDSCH/PUSCH may be used for ACK/NACK for event-based beam reporting.

The field may be defined by, for example, x bits (for example, x = 1).

When event-based beam reporting is configured, the new field may be included in the DCI.

For example, when a field included in the DCI and used for ACK/NACK for event-based beam reporting indicates a first value (for example, 0 (or 1)), the UE may determine that an ACK has been received. In addition, when a field included in the DCI and used for ACK/NACK for event-based beam reporting indicates a second value (for example, 1 (or 2)), the UE may determine that a NACK has been received.

In addition, a special value of an existing field included in existing DCI may be reused for ACK/NACK for UCI-based/MAC CE-based event-based beam reporting.

According to the eighth embodiment above, ACK/NACK related to event-based beam reporting can be appropriately defined using DCI.

### <Ninth Embodiment>

A ninth embodiment relates to a (dedicated) search space/CORESET for event-based beam reporting.

The UE may receive ACK/NACK for event-based beam reporting (for example, UCI-based/MAC CE-based event-based beam reporting) using a specific method.

The UE may receive ACK/NACK for event-based beam reporting (for example, UCI-based/MAC CE-based event-based beam reporting) using a specific search space/CORESET.

A timer regarding ACK/NACK of event-based beam reporting may be defined/configured.

For example, when a UCI for event-based beam reporting is transmitted, the timer may be started.

For example, when the UE receives DCI of a DCI format (for example, DCI format 0_0/0_1/1_0/1_1) transmitted in the specific search space/CORESET before the timer expires, the UE may determine that the DCI is an ACK for event-based beam reporting. Otherwise, the UE may determine that event-based beam reporting has failed (that a NACK has been received).

When the UE determines that event-based beam reporting has failed (that a NACK has been received), the UE may retransmit event-based beam reporting.

According to the ninth embodiment above, UE operations for ACK/NACK related to event-based beam reporting can be appropriately defined.

### <Tenth Embodiment>

A tenth embodiment relates to ACK/NACK related to event-based beam reporting.

The UE may receive ACK/NACK for event-based beam reporting (for example, UCI-based/MAC CE-based event-based beam reporting) using a specific method.

An indication related to a TCI state may be used for a response from the NW (ACK/NACK related to event-based beam reporting).

For example, the indication related to the TCI state may be an indication by a TCI field included in a specific DCI (for example, DCI format 1_1/1-2).

In addition, for example, the indication related to the TCI state may be an indication of an (active) TCI state via a MAC CE.

The UE may determine that an indication related to any TCI state is a response from the NW (ACK/NACK related to event-based beam reporting). In this case, the UE may determine not to perform transmission of event-based beam reporting until a specific period has elapsed from the reception of the indication.

In addition, the UE may determine that an indication related to a specific TCI state is a response from the NW (ACK/NACK related to event-based beam reporting). When the indication related to the specific TCI state, for example, an indicated TCI state is associated with event-based beam reporting, the UE may determine that event-based beam reporting has been (normally) received in the NW. In this case, the UE may determine not to perform transmission of event-based beam reporting until a specific period has elapsed from the reception of the indication.

In addition, a trigger for specific beam reporting (for example, A beam reporting) may be used for a response from the NW (ACK/NACK related to event-based beam reporting).

According to the tenth embodiment above, ACK/NACK related to event-based beam reporting can be appropriately defined.

### <Supplement>

### [Notification of Information to UE]

Notification of any information (from the network (NW) (for example, the base station (BS))) to the UE (in other words, reception of any information from the BS by the UE) in the embodiments may be performed using physical layer signaling (for example, DCI), higher layer signaling (for example, RRC signaling, a MAC CE), a specific signal/channel (for example, a PDCCH, a PDSCH, or a reference signal), or a combination thereof.

When the notification is performed by a MAC CE, the MAC CE may be identified by including, in a MAC subheader, a new logical channel ID (LCID) not defined in existing standards.

When the notification is performed using DCI, the notification may be performed by a specific field of the DCI, a radio network temporary identifier (RNTI) used for scrambling of cyclic redundancy check (CRC) bits added to the DCI, a format of the DCI, or the like.

In addition, the notification of any information to the UE in the embodiments may be performed periodically, semi-persistently, or aperiodically.

### <<Notification of Information from UE>>

Notification of any information from the UE (to the NW) (in other words, transmission/report of any information to the BS by the UE) in the embodiments may be performed using physical layer signaling (for example, UCI), higher layer signaling (for example, RRC signaling, a MAC CE), a specific signal/channel (for example, a PUCCH, a PUSCH, a PRACH, or a reference signal), or a combination thereof.

When the notification is performed by a MAC CE, the MAC CE may be identified by including, in a MAC subheader, an LCID not defined in existing standards.

When the notification is performed by a UCI, the notification may be transmitted using a PUCCH or PUSCH.

In addition, the notification of any information from the UE in the embodiments above may be performed periodically, semi-persistently, or aperiodically.

### [About Application of Each Embodiment]

At least one of the embodiments described above may be applied when a specific condition is satisfied. The specific condition may be defined in a standard, or a UE/BS may be notified of the specific condition by using higher layer signaling/physical layer signaling.

At least one of the embodiments may be applied only to a UE that has reported a specific UE capability or supports the specific UE capability. Note that "supporting" and "whether to support" may be interchangeable with each other.

The specific UE capability may indicate at least one of the following:
- supporting the specific processing/operation/control/information in at least one of the embodiments;
- supporting event-based beam reporting;
- supporting a (dedicated) CG PUSCH configuration for event-based beam reporting;
- supporting a SP-CSI reporting configuration in a PUSCH for event-based beam reporting;
- supporting an A-CSI reporting configuration in a PUSCH for event-based beam reporting;
- supporting new UCI/(extended) CG-UCI/(extended) UTO-CSI in a CG PUSCH configured for event-based beam reporting;
- supporting a (dedicated) SR/PUCCH-SR configuration for event-based beam reporting;
- supporting autonomous retransmission of event-based beam reporting by the UE;
- supporting autonomous retransmission of CG PUSCH for event-based beam reporting by the UE;
- supporting a new RNTI for event-based beam reporting;
- supporting a new timer related to DCI detection regarding a new RNTI for event-based beam reporting;
- supporting use/reuse of a new DCI field/existing DCI field for event-based beam reporting;
- supporting a (dedicated) search space/CORESET for event-based beam reporting; and
- supporting a new timer related to DCI detection in a (dedicated) search space/CORESET for event-based beam reporting.

The specific UE capability may be capability applied over all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each Feature Set (FS) or Feature Set Per Component-carrier (FSPC).

In addition, the specific UE capability may be capability applied across all the duplex schemes (in common irrespective of duplex scheme) or may be capability for each duplex scheme (for example, time division duplex (TDD) and frequency division duplex (FDD)).

In addition, at least one of the embodiments may be applied when the UE is configured/activated/triggered with specific information related to the embodiments (or to perform the operations of the above embodiments) via higher layer signaling/physical layer signaling. For example, the specific information may be any RRC parameter for a specific release (for example, Rel. 18/19), or the like.

The UE may apply, for example, the operations of Rel. 15/16/17 when at least one of the specific UE capabilities is not supported or the specific information is not configured.

### (Supplementary Notes)

Regarding one embodiment of the present disclosure, the following supplementary notes of the invention will be given.

### [Supplementary Note 1-1]

A terminal including:
a control section that determines a trigger of event-based beam reporting for a Multi-Input Multi-Output (MIMO) operation; and
a transmitting section that transmits beam reporting information regarding the event-based beam reporting in a configured grant physical uplink shared channel (CG PUSCH) or a physical uplink control channel (PUCCH).

### [Supplementary Note 1-2]

The terminal according to Supplementary Note 1-1, in which the beam reporting information is transmitted using a medium access control (MAC) control element or uplink control information.

### [Supplementary Note 1-3]

The terminal according to Supplementary Note 1-1 or 1-2, in which the transmitting section transmits a scheduling request related to the event-based beam reporting.

### [Supplementary Note 1-4]

The terminal according to any one of Supplementary Notes 1-1 to 1-3, in which the control section controls retransmission of the beam reporting information based on a timer regarding retransmission of the event-based beam reporting.

### [Supplementary Note 2-1]

A terminal including:
a control section that determines a trigger of event-based beam reporting for a mobility operation; and
a transmitting section that transmits beam reporting information regarding the event-based beam reporting in a configured grant physical uplink shared channel (CG PUSCH) or a physical uplink control channel (PUCCH).

### [Supplementary Note 2-2]

The terminal according to Supplementary Note 2-1, in which the beam reporting information is transmitted using a medium access control (MAC) control element or uplink control information.

### [Supplementary Note 2-3]

The terminal according to Supplementary Note 2-1 or 2-2, in which the transmitting section transmits a scheduling request related to the event-based beam reporting.

### [Supplementary Note 2-4]

The terminal according to any one of Supplementary Notes 2-1 to 2-3, in which the control section controls retransmission of the beam reporting information based on a timer regarding retransmission of the event-based beam reporting.

### [Supplementary Note 3-1]

A terminal including:
a transmitting section that transmits beam reporting information regarding event-based beam reporting; and
a control section that controls reception of a response to the beam reporting information using a specific method.

### [Supplementary Note 3-2]

The terminal according to Supplementary Note 3-1, in which the control section controls retransmission of the beam reporting information based on a timer regarding retransmission of the event-based beam reporting.

### [Supplementary Note 3-3]

The terminal according to Supplementary Note 3-1 or 3-2, in which the response is transmitted using at least one of specific downlink control information (DCI), a specific DCI field, a specific search space, and a specific control resource set.

### [Supplementary Note 3-4]

The terminal according to any one of Supplementary Notes 3-1 to 3-3, in which the response is transmitted using an indication of a transmission configuration indication (TCI) state.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

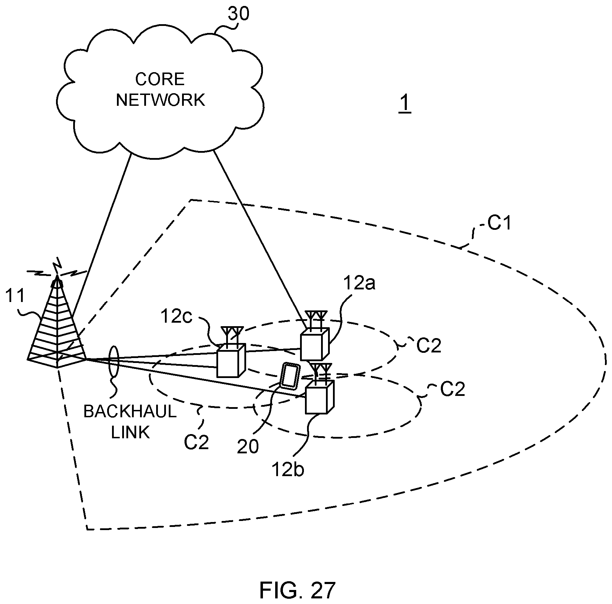

FIG. 27 is a diagram illustrating an example of a schematic configuration of the radio communication system according to one embodiment. A radio communication system 1 (which may be simply referred to as a system 1) may be a system that implements communication using long term evolution (LTE), 5th generation mobile communication system New Radio (5G NR), and the like defined by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (Frequency Range 1 (FR1)) or a second frequency band (Frequency Range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NF) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource for searching DCI. The search space corresponds to a search area and a search method for PDCCH candidates. One CORESET may be associated with one or a plurality of search spaces. UE may monitor CORESET associated with a certain search space based on search space configuration.

One search space may correspond to a PDCCH candidate corresponding to one or a plurality of aggregation levels. One or a plurality of search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminalspecific reference signals (UE-specific Reference Signals)".

### (Base Station)

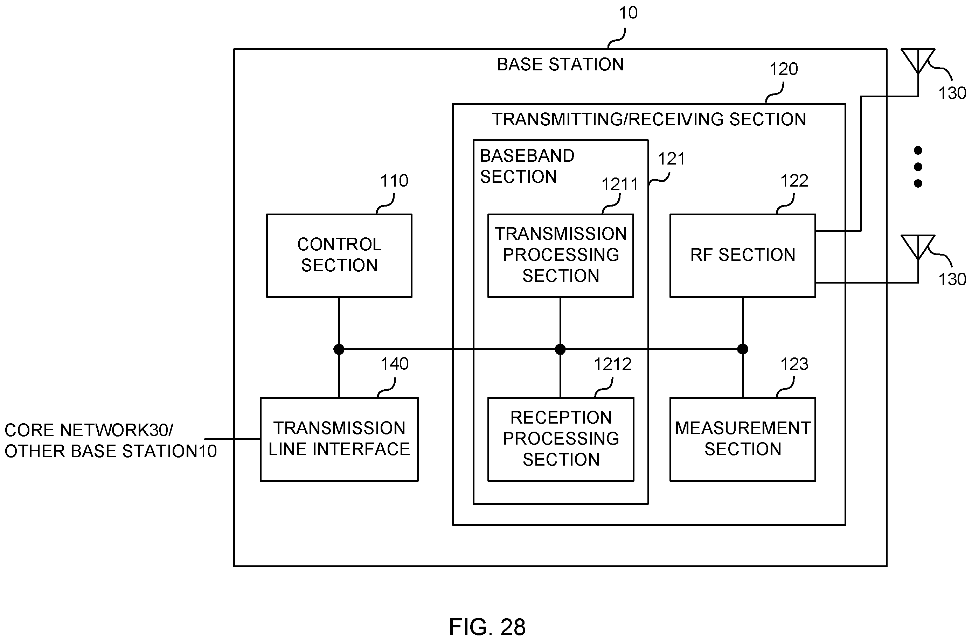

FIG. 28 is a diagram illustrating an example of a configuration of the base station according to one embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, or the like, which is described based on common recognition in a technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, or the like, which is described based on common recognition in a technical field according to the present disclosure.

The transmitting/receiving section 120 may be configured as an integrated transmitting/receiving section or may include a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-to-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus (for example, a network node providing the NF) included in the core network 30, another base station 10, and the like, and may acquire, transmit, and the like user data (user plane data), control plane data, and the like for the user terminal 20.

It is noted that, the transmitting section and the receiving section of the base station 10 in the present disclosure may include at least one of the transmitting/receiving section 120, the transmitting/receiving antenna 130, and the transmission line interface 140.

The control section 110 may control transmission of a configuration regarding a trigger of event-based beam reporting for a Multi-Input Multi-Output (MIMO) operation. The transmitting/receiving section 120 may receive beam reporting information regarding the event-based beam reporting in a configured grant physical uplink shared channel (CG PUSCH) or a physical uplink control channel (PUCCH).

The control section 110 may transmit a configuration regarding a trigger of event-based beam reporting for a mobility operation. The transmitting/receiving section 120 may receive beam reporting information regarding the event-based beam reporting in a configured grant physical uplink shared channel (CG PUSCH) or a physical uplink control channel (PUCCH).

The transmitting/receiving section 120 may receive beam reporting information regarding event-based beam reporting. The control section 110 may control transmission of a response to the beam reporting information using a specific method.

### (User Terminal)

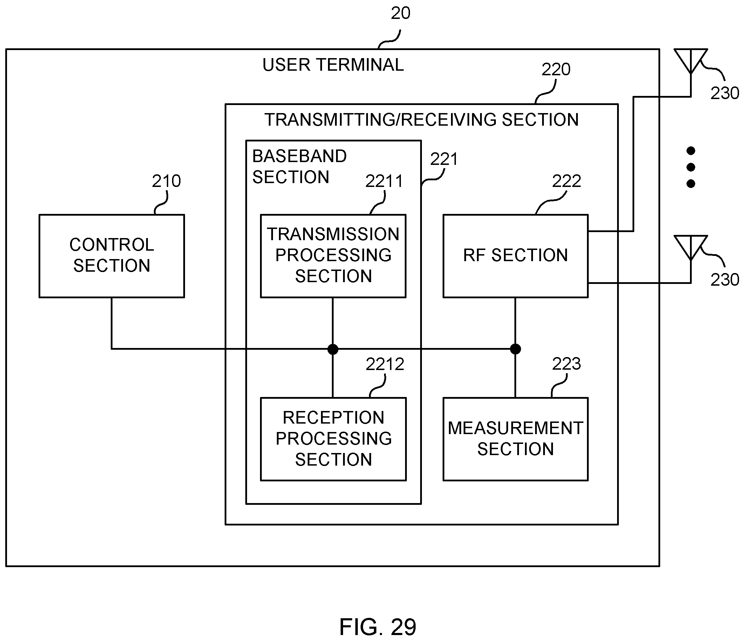

FIG. 29 illustrates an example of a configuration of the user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 may include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 may include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 may include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-to-analog conversion on the bit string to be transmitted, to output a baseband signal.

It is noted that whether to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform, and otherwise, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the measurement section 223 may derive channel measurement for CSI computation, based on a channel measurement resource. The channel measurement resource may be, for example, a non-zero power (NZP) CSI-RS resource. The measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchangeably used with a zero power (ZP) CSI-RS. Note that, in the present disclosure, CSI-RS, NZP CSI-RS, ZP CSI-RS, CSI-IM, CSI-SSB, and the like may be interchangeably used with each other.

Note that the transmitting section and the receiving section of the user terminal 20 in the present disclosure may include at least one of the transmitting/receiving section 220 and the transmitting/receiving antenna 230.

The control section 210 may determine a trigger of event-based beam reporting for a Multi-Input Multi-Output (MIMO) operation. The transmitting/receiving section 220 may transmit beam reporting information regarding the event-based beam reporting in a configured grant physical uplink shared channel (CG PUSCH) or a physical uplink control channel (PUCCH).

The beam reporting information may be transmitted using a medium access control (MAC) control element or uplink control information (new UCI/CG-UCI/UTO-UCI).

The transmitting/receiving section 220 may transmit a scheduling request related to the event-based beam reporting.

The control section 210 may control retransmission of the beam reporting information based on a timer regarding retransmission of the event-based beam reporting.

The control section 210 may determine a trigger of event-based beam reporting for a mobility operation. The transmitting/receiving section 220 may transmit beam reporting information regarding the event-based beam reporting in a configured grant physical uplink shared channel (CG PUSCH) or a physical uplink control channel (PUCCH).

The beam reporting information may be transmitted using a medium access control (MAC) control element or uplink control information (new UCI/CG-UCI/UTO-UCI).

The transmitting/receiving section 220 may transmit a scheduling request related to the event-based beam reporting.

The control section 210 may control retransmission of the beam reporting information based on a timer regarding retransmission of the event-based beam reporting.

The transmitting/receiving section 220 may transmit beam reporting information regarding event-based beam reporting. The control section 210 may control reception of a response to the beam reporting information using a specific method.

The control section 210 may control retransmission of the beam reporting information based on a timer regarding retransmission of the event-based beam reporting.

The response may be transmitted using at least one of specific downlink control information (DCI), a specific DCI field, a specific search space, and a specific control resource set.

The response may be transmitted using an indication of a transmission configuration indication (TCI) state.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

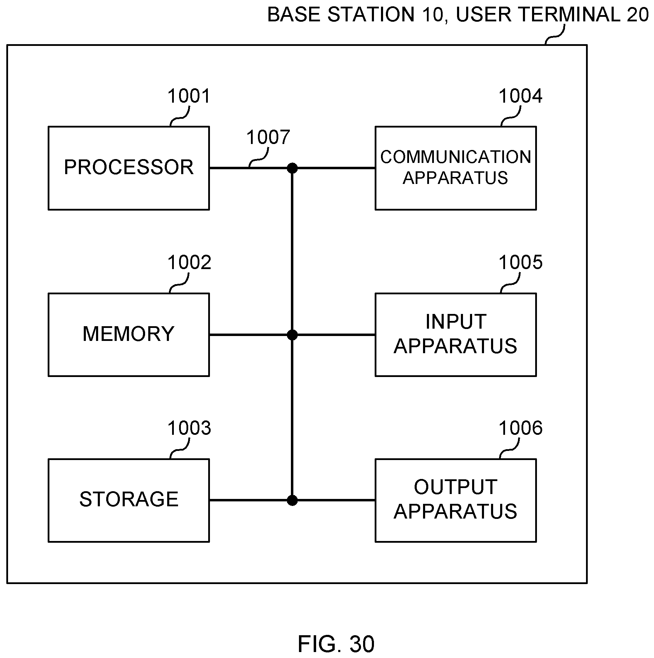

For example, a base station, a user terminal, and so on according to one embodiment of the present disclosure may function as a computer that executes the processes of the radio communication method of the present disclosure. FIG. 30 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channelencoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

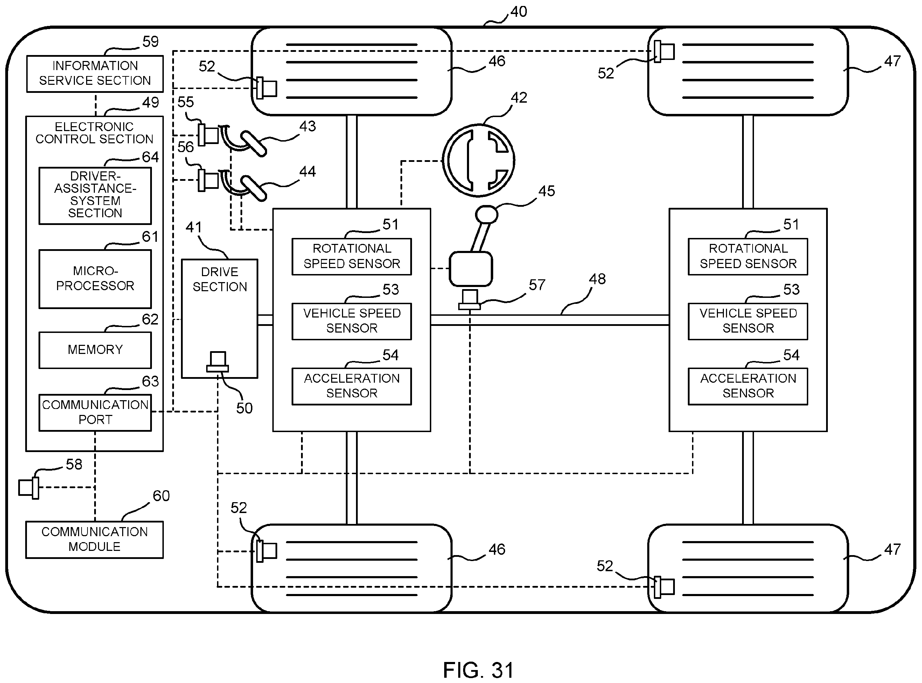

FIG. 31 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that determines a trigger of event-based beam reporting for a Multi-Input Multi-Output (MIMO) operation; and
a transmitting section that transmits beam reporting information regarding the event-based beam reporting in a configured grant physical uplink shared channel (CG PUSCH) or a physical uplink control channel (PUCCH).

2. The terminal according to claim 1, wherein the beam reporting information is transmitted using a medium access control (MAC) control element or uplink control information.

3. The terminal according to claim 1, wherein the transmitting section transmits a scheduling request related to the event-based beam reporting.

4. The terminal according to claim 1, wherein the control section controls retransmission of the beam reporting information based on a timer regarding retransmission of the event-based beam reporting.

5. A radio communication method of a terminal, comprising:
a step of determining a trigger of event-based beam reporting for a Multi-Input Multi-Output (MIMO) operation; and
a step of transmitting beam reporting information regarding the event-based beam reporting in a configured grant physical uplink shared channel (CG PUSCH) or a physical uplink control channel (PUCCH).

6. A base station comprising:
a control section that controls transmission of a configuration regarding a trigger of event-based beam reporting for a Multi-Input Multi-Output (MIMO) operation; and
a receiving section that receives beam reporting information regarding the event-based beam reporting in a configured grant physical uplink shared channel (CG PUSCH) or a physical uplink control channel (PUCCH).
